(19) Europäisches Patentamt
European Patent Office
Office européen des brevets

(11) **EP 4 686 077 A1**

(12) **EUROPEAN PATENT APPLICATION**
published in accordance with Art. 153(4) EPC

(43) Date of publication:
**28.01.2026 Bulletin 2026/05**

(21) Application number: **23928600.8**

(22) Date of filing: **22.03.2023**

(51) International Patent Classification (IPC):
**H02P 6/10** (2006.01)      **H02P 21/05** (2006.01)
**H02P 21/22** (2016.01)

(52) Cooperative Patent Classification (CPC):
**H02P 6/10; H02P 21/05; H02P 21/22**

(86) International application number:
**PCT/JP2023/011065**

(87) International publication number:
**WO 2024/195017 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Mobility
Corporation
Tokyo 100-8310 (JP)**

(72) Inventors:
• **HINO, Tatsuro**
**Tokyo 100-8310 (JP)**

• **MORI, Tatsuya**
**Tokyo 100-8310 (JP)**
• **NISHIKAWA, Hideya**
**Tokyo 100-8310 (JP)**
• **ARITA, Hideaki**
**Tokyo 100-8310 (JP)**
• **HAZEYAMA, Moriyuki**
**Tokyo 100-8310 (JP)**
• **HARADA, Shingo**
**Tokyo 100-8310 (JP)**
• **YAMAMOTO, Tatsuya**
**Tokyo 100-8310 (JP)**

(74) Representative: **Hoffmann Eitle
Patent- und Rechtsanwälte PartmbB
Arabellastraße 30
81925 München (DE)**

(54) **MOTOR CONTROL TABLE GENERATION METHOD, METHOD FOR MANUFACTURING
MOTOR CONTROL DEVICE, AND MOTOR CONTROL TABLE GENERATION DEVICE**

(57)      A motor control table generation method for generating a correction table in which current conditions and correction indices are associated with each other in a motor control device including a correction command value calculation unit configured to calculate a correction command value for suppressing a torque ripple of a motor by using the correction table includes: rotating the motor via a torque generation unit; performing torque determination to measure a pulsation amount, which is a torque ripple or a physical quantity correlated with the torque ripple, via a torque determination unit, the torque ripple including a frequency component equivalent to N times (N is an integer of 1 or more) a fundamental frequency corresponding to an electrical angle of the rotated motor; calculating, for each current condition, a modified correction index, which is a correction index for suppressing the pulsation amount measured through the torque determination, based on a measurement result of the torque determination of the torque determination unit via a correction command value modification unit; and writing the modified correction index into the correction table via the correction command value modification unit.

FIG. 12

**Description**

TECHNICAL FIELD

The present disclosure relates to a motor control table generation method, a method for manufacturing a motor control device, and a motor control table generation device.

BACKGROUND ART

As an AC motor for variable speed drive, a synchronous motor that uses a permanent magnet in a rotor is used. Such a synchronous motor is also referred to as a brushless motor in some cases. In controlling the synchronous motor, how to reduce a torque ripple generated from the synchronous motor is an important concern. For example, Patent Document 1 discloses a technology of correcting a command current by using a correction current for reducing a torque ripple. The use of the correction current produces a torque in an opposite phase to a torque ripple that may occur, thereby reducing the torque ripple.

Citation List

Patent Document

Patent Document 1: Japanese Unexamined Patent Application, First Publication No. 2016-111788

SUMMARY OF INVENTION

Technical Problem

However, there are various variations in an actual product. **In** order to accurately calculate a correction current value for reducing the torque ripple, it is necessary to accurately predict a torque ripple that may occur, but it is difficult to accurately predict the torque ripple because there are various variations in the actual product.

For example, inductance changes due to a variation in magnetic properties of an electromagnetic steel sheet of a stator core in a motor. Therefore, a calculated value of the torque ripple based on the assumed inductance and an actual measured value are different from each other. Similarly, variations in a magnetomotive force of a magnet and magnetic properties of a rotor core also cause similar variations.

Such a variation in magnetic properties may occur not only due to a variation in a material such as an electromagnetic steel sheet but also due to a structure. For example, in a case where the stator core is fixed to a housing by being compressed in a radial direction by shrink fitting or the like, the magnetic properties deteriorate due to compressive stress generated inside the stator core by the fixation. Since a variation in the difference between an outer diameter of the stator core and an inner diameter of the housing causes a variation in the compressive stress, it is practically difficult to keep the compressive stress constant.

Next, the torque ripple is greatly affected by a variation caused by a shape, such as roundness of an inner diameter of a stator. Regarding the variation in the stator shape, it is practically difficult to make the variation constant, and, even in a case where a motor constant such as a torque ripple or inductance is derived by electromagnetic field analysis or the like based on an ideal shape, there is a deviation from a measured value in an actually manufactured product. Even in a case where the torque ripple or the inductance is obtained by an experiment instead of the electromagnetic field analysis or the like, it is practically difficult to continue producing products that are exactly the same as those obtained by the experiment. Therefore, there is a deviation between a measurement result based on the experiment and characteristics of the actually manufactured product.

Further, the torque ripple is greatly affected by a variation caused by assembly, such as coaxiality between the inner diameter of the stator and an outer diameter of the rotor. It is desirable that the inner diameter of the stator and the outer diameter of the rotor are disposed completely coaxially, but it is known that, in a case where the inner diameter of the stator and the outer diameter of the rotor deviate from each other coaxially, a torque ripple with a period that is an integer multiple of a fundamental period corresponding to an electrical angle occurs. Even in a case where the stator shape or the like is measured, it is difficult to predict the degree to which the coaxiality deviates during assembly. Therefore, there is a deviation between characteristics predicted from the stator shape or the like and characteristics of the actually manufactured product.

As a countermeasure against this, it is assumed to provide a motor control device with a functional unit for correcting the manufacturing variations. However, the amount of calculation for correcting the manufacturing variations increases, which may result in a large amount of heat generated during the calculation, and thus the motor may have to be

EP 4 686 077 A1

increased in size, resulting in high cost.

The present disclosure has been made to solve the above-described problem, and an object of the present disclosure is to provide a motor control table generation device, a method for manufacturing a motor control device, and a motor control table generation method capable of suppressing a torque ripple even in a case where variations in characteristics occur due to manufacturing or the like.

Solution to Problem

In order to solve the above problem, according to one aspect of the present disclosure, there is provided a motor control table generation method for generating a correction table in which current conditions and correction indices are associated with each other in a motor control device including a correction command value calculation unit configured to calculate a correction command value for suppressing a torque ripple of a motor by using the correction table, the motor control table generation method including: rotating the motor via a torque generation unit; performing torque determination to measure a pulsation amount, which is a torque ripple or a physical quantity correlated with the torque ripple, via a torque determination unit, the torque ripple including a frequency component equivalent to N times (N is an integer of 1 or more) a fundamental frequency corresponding to an electrical angle of the rotated motor; calculating, for each current condition, a modified correction index, which is a correction index for suppressing the pulsation amount measured through the torque determination, based on a measurement result of the torque determination of the torque determination unit via a correction command value modification unit; and writing the modified correction index into the correction table via the correction command value modification unit.

In order to solve the above problem, according to one aspect of the present disclosure, there is provided a method for manufacturing a motor control device using the motor control table generation method.

In order to solve the above problem, according to one aspect of the present disclosure, there is provided a motor control table generation device that generates a correction table in which current conditions and correction indices are associated with each other in a motor control device including a correction command value calculation unit configured to calculate a correction command value for suppressing a torque ripple of a motor by using the correction table, the motor control table generation device including: a torque generation unit configured to rotate the motor; a torque determination unit configured to perform torque determination to measure a pulsation amount, which is a torque ripple or a physical quantity correlated with the torque ripple, the torque ripple including a frequency component equivalent to N times (N is an integer of 1 or more) a fundamental frequency corresponding to an electrical angle of the rotated motor; and a correction command value modification unit configured to calculate, for each current condition, a modified correction index, which is a correction index for suppressing the pulsation amount measured through the torque determination, based on a measurement result of the torque determination of the torque determination unit, and write the modified correction index into the correction table.

Advantageous Effects of Invention

According to the present disclosure, it is possible to suppress a torque ripple even in a case where variations in characteristics occur due to manufacturing.

BRIEF DESCRIPTION OF DRAWINGS

[FIG. 1] A block diagram showing the configuration of a motor control device according to Embodiment 1.
[FIG. 2] A diagram for describing a generation principle of a switching signal according to Embodiment 1.
[FIG. 3] A diagram showing an example of a torque pulsation waveform according to Embodiment 1.
[FIG. 4] A diagram showing an example of a torque pulsation waveform according to Embodiment 1.
[FIG. 5] A diagram showing an example of an amplitude table for suppressing torque pulsation according to Embodiment 1.
[FIG. 6] A diagram showing an example of a phase table for suppressing torque pulsation according to Embodiment 1.
[FIG. 7] A diagram showing an example of a waveform affected by a disturbance according to Embodiment 1.
[FIG. 8] A diagram showing an example of a waveform affected by a disturbance according to Embodiment 1.
[FIG. 9] A diagram showing an example of an amplitude table for suppressing an influence of a disturbance according to Embodiment 1.
[FIG. 10] A diagram showing an example of a phase table for suppressing an influence of a disturbance according to Embodiment 1.
[FIG. 11] A schematic diagram in which the configuration of a motor and a motor control device according to Embodiment 1 is simplified.

[FIG. 12] A block diagram showing the configuration of a generation device according to Embodiment 1.
[FIG. 13] A diagram for describing the generation device according to Embodiment 1.
[FIG. 14] A flowchart showing a flow of processing performed by the generation device according to Embodiment 1.
[FIG. 15] A diagram showing input and output of the motor control device according to Embodiment 1.
[FIG. 16] A flowchart showing a flow of processing performed by the generation device according to Embodiment 1.
[FIG. 17] A flowchart showing a flow of processing performed by the generation device according to Embodiment 2.
[FIG. 18] A diagram for describing processing performed by the generation device according to Embodiment 2.
[FIG. 19] A diagram for describing processing performed by the generation device according to Embodiment 2.
[FIG. 20] A diagram for describing processing performed by the generation device according to Embodiment 2.
[FIG. 21] A diagram for describing processing performed by the generation device according to Embodiment 2.
[FIG. 22] A flowchart showing a flow of processing performed by the generation device according to Embodiment 3.
[FIG. 23] A flowchart showing a flow of processing performed by the generation device according to Embodiment 4.
[FIG. 24] A flowchart showing a flow of processing performed by the generation device according to Embodiment 4.

DESCRIPTION OF EMBODIMENTS

[Embodiment 1]

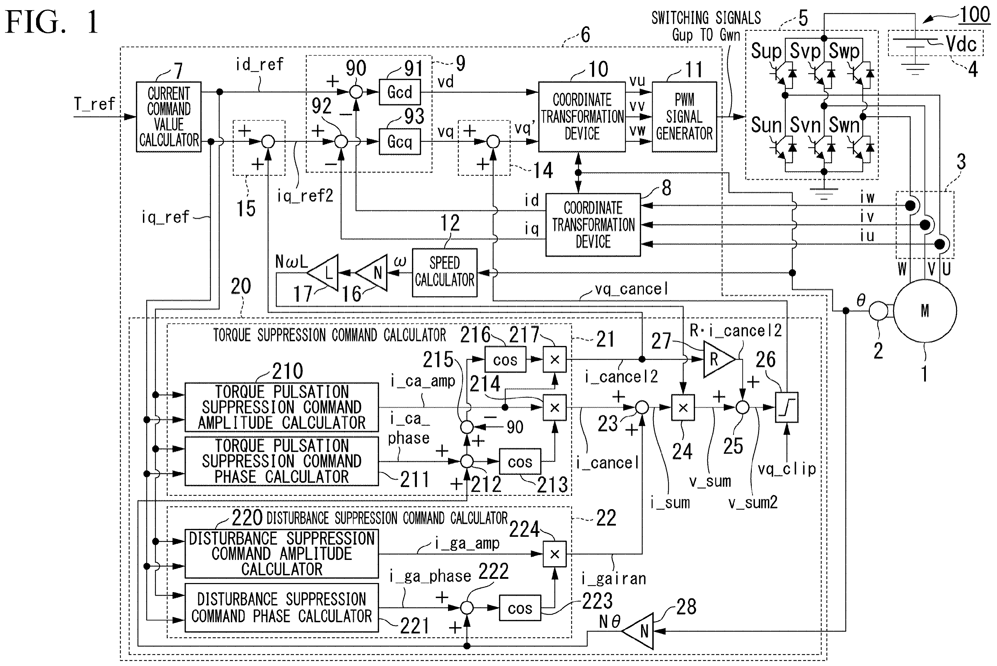

FIG. 1 is a block diagram showing the configuration of a motor control device according to Embodiment 1. As shown in FIG. 1, a motor control device 100 includes a rotation position determination unit 2, a current determination unit 3, an inverter 5, and a controller 6. A DC power supply 4 and a motor 1 are connected to the motor control device 100. The motor control device 100 controls the motor 1 based on a torque command T_ref as a control command input from the outside of the motor control device 100.

The motor 1 is a three-phase AC rotary machine having three-phase windings U, V, and W. In addition, the motor 1 is an AC rotary machine that can be controlled based on two rotating axes. In the present specification, the term "two rotating axes" means two axes that rotate in synchronization with a rotor of the motor 1 and that are orthogonal to each other in a transverse cross section. The term "transverse cross section" means a cross section perpendicular to a central axial line of the rotor. For example, the two rotating axes may be d-q axes. The d-axis is an axis connecting the central axial line of the rotor and a magnetic pole. The q-axis is an axis orthogonal to both the d-axis and the central axial line. In addition, the two rotating axes may be $\gamma$-$\delta$ axes. The $\gamma$-axis is an axis that is shifted in a rotation direction from the d-axis. The $\delta$-axis is an axis orthogonal to both the $\gamma$-axis and the central axial line. One of the two rotating axes is referred to as a first axis, and the other is referred to as a second axis. For example, in a case where the d-axis is referred to as a first axis, the q-axis is referred to as a second axis. The q-axis may be the first axis and the d-axis may be the second axis. Similarly, in a case where the $\gamma$-axis is referred to as a first axis, the $\delta$-axis is referred to as a second axis.

In the following, a case where the motor 1 is a permanent magnet synchronous rotary machine and the two rotating axes are the d-q axes will be described. Note that the motor 1 may be, for example, a winding field synchronous rotary machine, an induction rotary machine, or a synchronous reluctance motor. In addition, the d-axis and the q-axis in the following disclosure may be replaced with the $\delta$-axis and the $\gamma$-axis.

The rotation position determination unit 2 includes a resolver, an encoder, a magneto resistive (MR) sensor, and the like, and determines a rotor position $\theta$ by using these members. The rotor position $\theta$ is a position in a rotation direction of the rotor of the motor 1. In the present embodiment, the rotor position $\theta$ of the motor 1 is determined using the rotation position determination unit 2. Note that the configuration in which the rotor position $\theta$ of the motor 1 is estimated without using the rotation position determination unit 2 can also be adopted. That is, in the present disclosure, the motor control device 100 does not need to include the rotation position determination unit 2.

The DC power supply 4 is, for example, a battery, a DC-DC converter, a diode rectifier, or a pulse width modulation (PWM) rectifier, and outputs a DC bus voltage Vdc to the inverter 5 described below. The DC power supply 4 includes all devices that output a DC voltage.

The inverter 5 is a power converter that applies a voltage to the motor 1. The inverter 5 applies an AC voltage to the three-phase windings U, V, and W of the motor 1 based on the DC bus voltage Vdc output from the DC power supply 4 and switching signals Gup, Gvp, Gwp, Gun, Gvn, and Gwn output from the controller 6.

The inverter 5 includes switching elements Sup, Svp, Swp, Sun, Svn, and Swn. Each of the switching elements is, for example, a semiconductor switch such as an insulated gate bipolar transistor (IGBT), a bipolar transistor, or a metal oxide semiconductor (MOS) power transistor. In addition, a diode or a body diode is connected in anti-parallel to each of the switching elements.

The switching elements Sup, Svp, and Swp on a high potential side in an upper arm are connected to a positive electrode of the DC power supply 4. The switching elements Sun, Svn, and Swn on a low potential side in a lower arm are connected to the switching elements Sup, Svp, and Swp in the upper arm, respectively.

The switching signals Gup, Gvp, and Gwp output from the controller 13 are input to the switching elements Sup, Svp, and Swp in the upper arm, respectively. The switching signals Gun, Gvn, and Gwn output from the controller 13 are input to the switching elements Sun, Svn, and Swn in the lower arm, respectively. The switching elements Sup, Svp, and Swp in the upper arm and the switching elements Sun, Svn, and Swn in the lower arm are turned on or off by the switching signals Gup, Gvp, Gwp, Gun, Gvn, and Gwn output from the controller 13. Here, the on state is a conductive state. The off state is a non-conductive state. In the present specification and the drawings, the switching signals Gup, Gvp, Gwp, Gun, Gvn, and Gwn may be collectively referred to as "switching signals Gup to Gwn".

For example, in a case where the switching signal Gup outputs a signal indicating, for example, "1" as an ON command, the switching element Sup is turned on. In a case where the switching signal Gup outputs a signal indicating, for example, "0 (zero)" as an OFF command, the switching element Sup is turned off. The same applies to the other switching elements Svp, Swp, Sun, Svn, and Swn.

The switching signals Gup to Gwn are generated by a PWM signal generator 11 based on three-phase voltage command values vu, vv, and vw output from a coordinate transformation device 10 of the controller 6. **In** the present embodiment, the voltage command values vu, vv, and vw used for generating the switching signals Gup to Gwn are command values to which a cancellation voltage command value vq_cancel is added. The cancellation voltage command value vq_cancel is a correction command value obtained by superimposing the voltage command value on vq, which is generated by a cancellation calculator 20 in order to suppress an influence of torque pulsation and a disturbance. Specifically, the cancellation voltage command value vq_cancel is superimposed on a voltage command value vq out of two-phase voltage command values (fundamental wave command values) vd and vq before being transformed from the two-phase system to the three-phase system in the coordinate transformation device 10 of the controller 6. The two-phase voltage command values vd and vq and the three-phase voltage command values vu, vv, and vw are equivalent to each other, as they are just a result of a coordinate transformation from the two-phase to the three-phase system. Therefore, the three-phase voltage command values vu, vv, and vw are command values to which the cancellation voltage command value vq_cancel is added. A specific method in which the cancellation calculator 20 generates the cancellation voltage command value will be described in detail below. **In** addition, a specific method in which the PWM signal generator 11 generates the switching signals Gup to Gwn based on the three-phase voltage command values vu, vv, and vw will be described in detail below.

The current determination unit 3 determines motor currents iu, iv, and iw flowing through the three-phase windings U, V, and W of the motor 1. The current determination unit 3 outputs information indicating the determined motor currents iu, iv, and iw to the controller 6. For the current determination unit 3, any method of determining a phase current may be adopted. **In** addition, the current determination unit 3 may determine the motor currents iu, iv, and iw by using voltages at both ends of a shunt resistor (not shown) connected in series to each of the switching elements Sun, Svn, and Swn on the lower potential side in the lower arm of the inverter 5, and the switching signals Gun, Gvn, and Gwn. In addition, the motor currents iu, iv, and iw may be determined by using a known "lower arm two-shunt method" or a known "bus one-shunt determination method".

The controller 6 uses the torque command T_ref, the motor currents iu, iv, and iw, and the rotor position θ as input values, and generates the switching signals Gup to Gwn for driving the inverter 5 based on these values. The controller 6 outputs the generated switching signals Gup to Gwn to the inverter 5. The controller 6 is, for example, a PWM controller that outputs the switching signals Gup to Gwn via a discrete time calculator such as a microcomputer or a digital signal processor (DSP). The controller 6 includes a current command value calculator 7, a coordinate transformation device 8 for determination, a current controller 9, a coordinate transformation device 10 for control, the PWM signal generator 11, a speed calculator 12, an adder 14, an adder 15, an amplifier 16, an amplifier 17, and the cancellation calculator 20.

The current command value calculator 7 calculates current command values id_ref and iq_ref, which are current command values in a d-q coordinate system, based on the torque command T_ref. For example, the current command value calculator 7 calculates the current command value id_ref using Equation (1-1). **In** addition, the current command value calculator 7 calculates the current command value iq_ref using Equation (1-2). T_ref is a torque command, and Kt is a torque constant [Nm/A].

$$\text{id\_ref} = 0 \ ... \ \text{Equation (1-1)}$$

$$\text{iq\_ref} = \text{T\_ref/Kt} \ ... \ \text{Equation (1-2)}$$

The current command value calculator 7 sets the current command value id_ref on the d-axis to 0 (zero) as shown in Equation (1-1). In addition, the current command value calculator 7 sets the current command value iq_ref on the q-axis to a value obtained by multiplying the torque command T_ref by 1/Kt as shown in Equation (1-2). id_ref is also called a "field-weakening current command value", and iq_ref is also called a "torque current command value". As a method for the current command value calculator 7 to calculate the current command value, max torque per ampere (MTPA) control, max torque per voltage (MTPV) control, and flux weakening control, which are known technologies, or a combination thereof may be adopted. A method of calculating the current command values id_ref and iq_ref with limited voltage utilization rates will be described in Embodiment 2 described below.

The coordinate transformation device 8 performs coordinate transformation based on the three-phase motor currents iu, iv, and iw determined by the current determination unit 3 and the rotor position θ determined by the rotation position determination unit 2. As a result, the coordinate transformation device 8 calculates the motor currents id and iq in the two rotating axes (d and q axes), and outputs the motor currents id and iq after the coordinate transformation, which are calculation results, to the current controller 9.

The adder 15 adds a torque pulsation suppression command value i_cancel2 calculated by the cancellation calculator 20 to the current command value iq_ref calculated by the current command value calculator 7, and outputs a current command value iq_ref2 after the addition to the current controller 9.

The current controller 9 calculates the fundamental wave command values vd and vq, which are the voltage command values in the two rotating axes (d and q axes) to the motor 1, through feedback control with respect to the current command value id_ref output from the current command value calculator 7 for the d-axis and the current command value iq_ref2 after the addition output from the adder 15 for the q-axis. The current controller 9 calculates the fundamental wave command values vd and vq in the two rotating axes (d and q axes) based on the current command value id_ref, the current command value iq_ref2, and the motor currents id and iq in the two rotating axes(d and q axes) output from the coordinate transformation device 8.

The current controller 9 includes a subtractor 90, a d-axis current controller 91, a subtractor 92, and a q-axis current controller 93.

The subtractor 90 calculates a d-axis current deviation ed, which is a deviation between the current command value id_ref on the d-axis and the motor current id on the d-axis, and outputs the calculated d-axis current deviation ed to the d-axis current controller 91. The d-axis current controller 91 calculates the fundamental wave command value vd such that the d-axis current deviation ed is 0 (zero) by using a control method such as P control or PI control. The d-axis current controller 91 outputs the calculated fundamental wave command value vd to the coordinate transformation device 10.

The subtractor 92 calculates a q-axis current deviation eq, which is a deviation between the current command value iq_ref2 on the q-axis and the motor current iq on the q-axis, and outputs the calculated q-axis current deviation eq to the q-axis current controller 93. The q-axis current controller 93 calculates the fundamental wave command value vq such that the q-axis current deviation eq is 0 (zero) by using a control method such as P control or PI control. The q-axis current controller 93 outputs the calculated fundamental wave command value vq to the adder 14.

The adder 14 adds the cancellation voltage command value vq_cancel calculated by the cancellation calculator 20 to the fundamental wave command value vq calculated by the q-axis current controller 93, and outputs a fundamental wave command value vq' after the addition to the coordinate transformation device 10.

The coordinate transformation device 10 performs coordinate transformation based on the fundamental wave command values vd and vq' and the rotor position θ determined by the rotation position determination unit 2, and calculates the fundamental wave command values vu, vv, and vw which are the three-phase voltage command values. Since the fundamental wave command values vu, vv, and vw calculated by the coordinate transformation device 10 are calculated by using the fundamental wave command value vd and the fundamental wave command value vq' after adding the cancellation voltage command value vq_cancel, the fundamental wave command values vu, vv, and vw reflect the cancellation voltage command value vq_cancel. The coordinate transformation device 10 outputs the calculated fundamental wave command values vu, vv, and vw to the PWM signal generator 11.

The PWM signal generator 11 outputs pulse width modulation (PWM)-modulated switching signals Gup to Gwn, based on the fundamental wave command values vu, vv, and vw output from the coordinate transformation device 10.

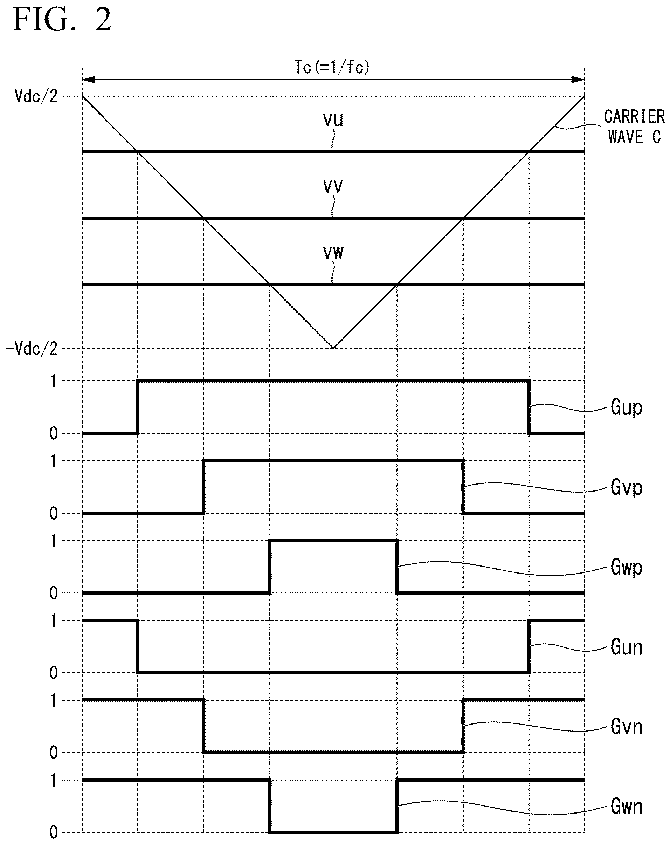

Here, a method for the PWM signal generator 11 to generate the switching signals Gup to Gwn will be described with reference to FIG. 2. FIG. 2 is a diagram for describing the generation principle of the switching signal in Embodiment 1. FIG. 2 shows time-series changes of the fundamental wave command values vu, vv, and vw, a carrier wave C which is a carrier triangular wave having a period Tc (frequency fc), and the switching signals Gup to Gwn. In FIG. 2, a horizontal axis represents a time, and a vertical axis represents a signal level. The PWM signal generator 11 generates the switching signals Gup to Gwn by comparing the fundamental wave command values vu, vv, and vw with the carrier wave C.

Specifically, in a case where the fundamental wave command value vu is larger than the carrier triangular wave C, the PWM signal generator 11 sets the switching signal Gup to, for example, "1" as an ON command and sets the switching signal Gun to "0 (zero)" as an OFF command. On the other hand, in a case where the fundamental wave command value vu is smaller than the carrier wave C, the PWM signal generator 11 sets the switching signal Gup to "0 (zero)" as an OFF command and sets the switching signal Gun to "1" as an ON command.

In addition, in a case where the fundamental wave command value vv is larger than the carrier triangular wave C, the PWM signal generator 11 sets the switching signal Gvp to, for example, "1" as an ON command and sets the switching signal Gvn to "0 (zero)" as an OFF command. On the other hand, in a case where the fundamental wave command value vv is smaller than the carrier wave C, the PWM signal generator 11 sets the switching signal Gvp to, for example, "0 (zero)" as an OFF command and sets the switching signal Gvn to "1" as an ON command.

In addition, in a case where the fundamental wave command value vw is larger than the carrier triangular wave C, the PWM signal generator 11 sets the switching signal Gwp to, for example, "1" as an ON command and sets the switching signal Gwn to "0 (zero)" as an OFF command. On the other hand, in a case where the fundamental wave command value vw is smaller than the carrier wave C, the PWM signal generator 11 sets the switching signal Gwp to "0 (zero)" as an OFF command and sets the switching signal Gwn to "1" as an ON command.

A short-circuit prevention time, that is, a dead time may be provided for the switching signals Gup to Gwn such that the switching elements Sup, Svp, and Swp in the upper arm and the switching elements Sun, Svn, and Swn in lower arm in the inverter 5 are not turned on simultaneously.

Returning to the description of FIG. 1, the speed calculator 12 determines a rotational angular velocity ω of the motor 1 based on the rotor position θ of the motor 1 determined by the rotation position determination unit 2. The speed calculator 12 calculates the rotational angular velocity ω of the motor 1 by differentiating or subtracting the rotor position θ, and outputs the calculated rotational angular velocity ω. The rotational angular velocity ω of the motor 1 output here is a rotational angular velocity of an electrical angle in the motor 1, and matches a rotational angular velocity of a mechanical angle multiplied by the number of pole pairs of the motor 1.

The amplifier 16 calculates a value (Nω) obtained by multiplying the rotational angular velocity ω output from the speed calculator 12 by a constant N, and outputs the calculated value (Nω) to the amplifier 17. The constant N here is the order of the torque pulsation generated by the motor 1 to be suppressed. For example, in a case where a frequency component of the torque pulsation generated by the motor 1 that corresponds to six times a fundamental wave frequency (frequency in the fundamental wave command values vu, vv, and vw described above) is to be suppressed, "6" is set as the constant N. Hereinafter, a frequency component corresponding to N times the fundamental wave frequency may be referred to as an "Nth-order frequency component in terms of electrical angle".

The amplifier 17 calculates a value (NωL) obtained by further multiplying a value obtained by multiplying the rotational angular velocity ω by a constant N, which is output from the amplifier 16, by a constant L, and outputs the calculated value (NωL) to the cancellation calculator 20. The constant L here is the inductance of the motor 1.

The cancellation calculator 20 calculates the cancellation voltage command value vq_cancel and the torque pulsation suppression command value i_cancel2 based on the current command values id_ref and iq_ref output from the current command value calculator 7, the rotor position θ output from the rotation position determination unit 2, and the value (NωL) output from the amplifier 17.

The cancellation calculator 20 includes a torque suppression command value calculator 21, a disturbance suppression command value calculator 22, an adder 23, a multiplier 24, an adder 25, a limiter 26, an amplifier 27, and an amplifier 28.

The torque suppression command value calculator 21 calculates torque pulsation suppression command values i_cancel and i_cancel2 based on the current command values id_ref and iq_ref and the rotor position θ. The torque pulsation suppression command values i_cancel and i_cancel2 are both current command values for suppressing the torque pulsation. The torque pulsation suppression command values i_cancel and i_cancel2 are sine waves having the same amplitude and different phases.

The torque suppression command value calculator 21 includes a torque suppression command amplitude calculator 210, a torque suppression command phase calculator 211, an adder 212, a cosine calculator 213, a multiplier 214, a subtractor 215, a cosine calculator 216, and a multiplier 217.

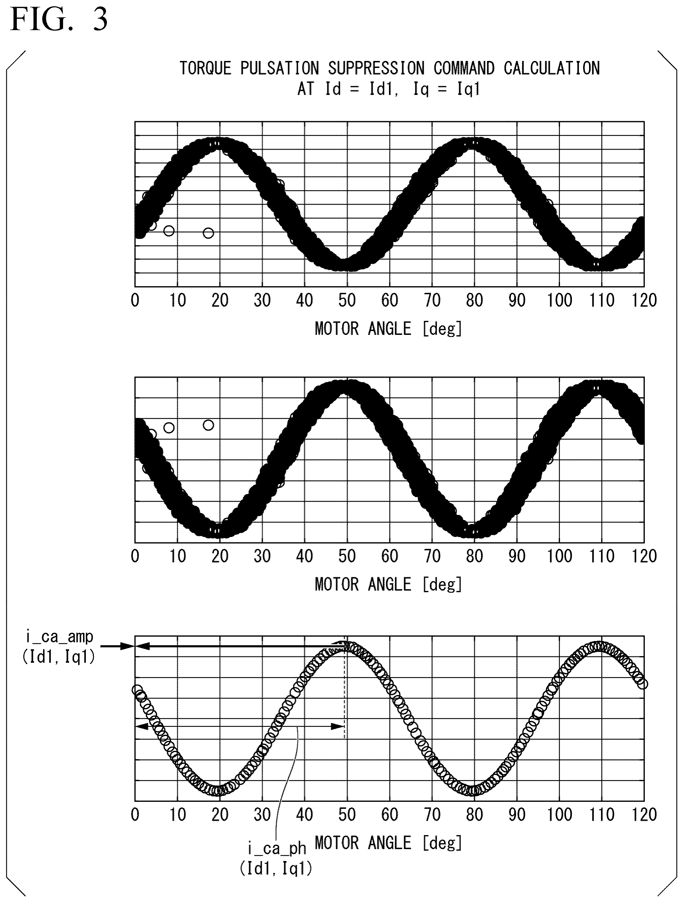

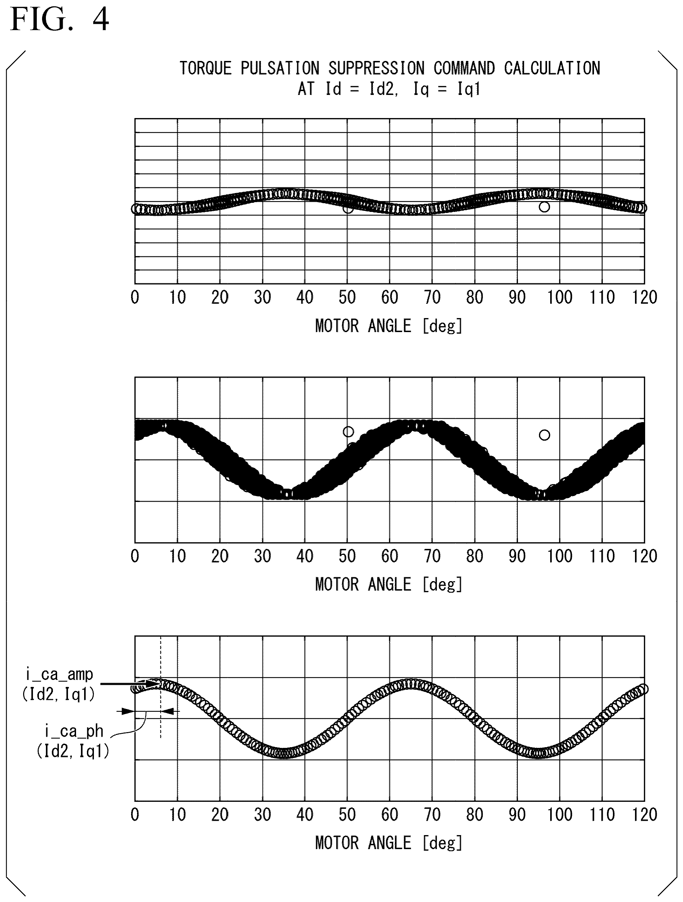

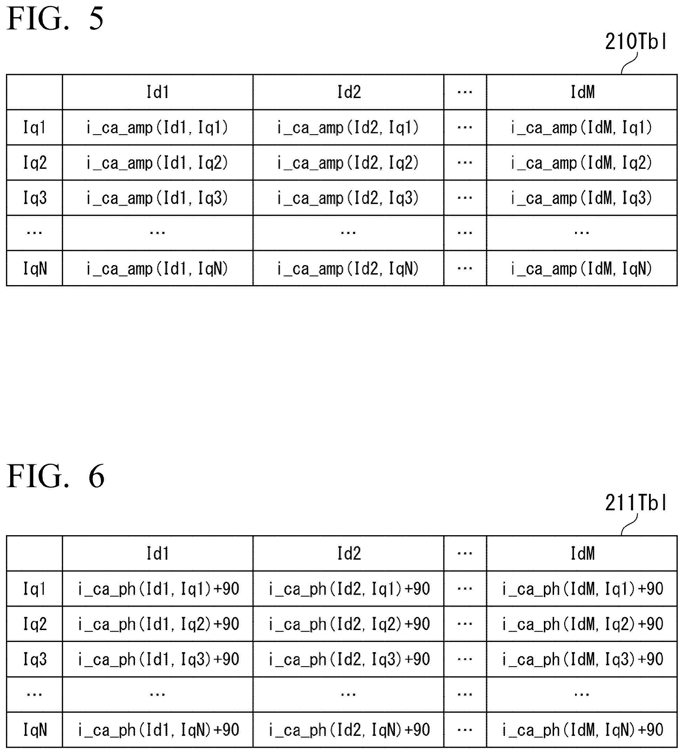

The torque suppression command amplitude calculator 210 calculates an amplitude i_ca_amp, which is an amplitude value of the torque pulsation suppression command values i_cancel and i_cancel2, based on the current command values id_ref and iq_ref. A method for the torque suppression command amplitude calculator 210 to calculate the amplitude i_ca_amp will be described with reference to FIGS. 3 to 6. FIGS. 3 and 4 are diagrams showing an example of a torque pulsation waveform according to Embodiment 1. FIG. 5 is a diagram showing an example of an amplitude table for suppressing torque pulsation according to Embodiment 1. FIG. 6 is a diagram showing an example of a phase table for suppressing torque pulsation according to Embodiment 1.

An upper part of FIG. 3 shows an example of a torque pulsation waveform including a sixth-order frequency component in terms of electrical angle extracted from a torque measured when a sinusoidal current is applied to the motor and the motor 1 is driven under a specific current condition. The current condition of the motor 1 here is such that the motor current Id on the d-axis of the motor 1 is set to a constant value Id1, the motor current Iq on the q-axis is set to a constant value Iq1, and the rotational angular velocity of the motor 1 is constant.

In the present specification and the drawings, the current condition when the motor 1 is driven with the motor current Id = Id# and the motor current Iq = Iq# may be referred to as a current condition (Id#, Iq#). # is a numerical value for identifying the current value. For example, the current condition when the motor 1 is driven with the current Id = Id1 and the current Iq = Iq1 is referred to as a current condition (Id1, Iq1).

The current command value id_ref on the d-axis may be used as the motor current Id. In addition, the current command value iq_ref on the q-axis may be used as the motor current Iq.

A middle part of FIG. 3 shows a waveform of the motor current for suppressing the torque pulsation, which is a value obtained by multiplying the torque pulsation waveform shown in the upper part by "-1/Kt".

A lower part of FIG. 3 shows an example in which the waveform of the motor current shown in the middle part is formulated to extract an amplitude and an initial phase of the waveform. An amplitude value of the motor current for suppressing the torque pulsation under the current condition (Id1, Iq1) is an amplitude i_ca_amp (Id1, Iq1). An initial phase value of the motor current for suppressing the torque pulsation under the current condition (Id1, Iq1) is a phase i_ca_ph (Id1, Iq1).

An upper part of FIG. 4 shows an example of a torque pulsation waveform, which is a sixth-order frequency component in terms of electrical angle extracted from a torque of the motor 1 driven under a current condition different from that of FIG. 3. The current condition of the motor 1 here is a current condition (Id2, Iq1), and is such that the motor current Id on the d-axis of the motor 1 is set to a constant value Id2, Iq on the q-axis is set to a constant value Iq1, and the rotational angular velocity of the motor 1 is constant.

A middle part of FIG. 4 shows a waveform of the motor current for suppressing the torque pulsation, which is a value obtained by multiplying the torque pulsation waveform shown in the upper part by "-1/Kt".

A lower part of FIG. 4 shows an example in which the waveform of the motor current shown in the middle part is formulated to extract an amplitude and an initial phase of the waveform. An amplitude value of the motor current for suppressing the torque pulsation under the current condition (Id2, Iq1) is an amplitude i_ca_amp (Id2, Iq1). An initial phase value of the motor current for suppressing the torque pulsation under the current condition (Id2, Iq1) is a phase i_ca_ph (Id2, Iq1).

FIG. 5 shows an example of a torque amplitude table 210Tbl. The torque amplitude table 210Tbl is a table showing a correspondence relationship between the current condition and the amplitude value of the motor current for suppressing the torque pulsation. For example, in the same manner as the method described in FIGS. 3 and 4, the amplitude value of the motor current for suppressing the torque pulsation is calculated in advance under various current conditions in which the current is assumed to be applied to the motor 1, and the calculated amplitude value is stored in the torque amplitude table 210Tbl.

When the motor 1 is rotated, the current command values id_ref and iq_ref are input to the torque suppression command amplitude calculator 210. The torque suppression command amplitude calculator 210 refers to the torque amplitude table 210Tbl based on the input current command values id_ref and iq_ref, and acquires an amplitude i_ca_amp (id_ref, iq_ref) corresponding to a current condition (id_ref, iq_ref). The torque suppression command amplitude calculator 210 outputs the acquired amplitude i_ca_amp (id_ref, iq_ref) as the amplitude i_ca_amp of the current command value for suppressing the torque pulsation in the motor 1.

Here, the torque suppression command amplitude calculator 210 may calculate the amplitude i_ca_amp by performing linear interpolation. The torque suppression command amplitude calculator 210 calculates the amplitude i_ca_amp using linear interpolation, for example, in a case where the current command value iq_ref under the current condition for which the amplitude is to be calculated is a current value that is midway between the motor currents Iq1 and Iq2 in the torque amplitude table 210Tbl. For example, the amplitude value in a current condition (IdM, Iq1) located between the current condition (Id1, Iq1) in FIG. 3 and the current condition (Id2, Iq1) in FIG. 4 may be calculated by linear interpolation. Here, IdM is, for example, (Id1 + Id2)/2. In this case, the torque suppression command amplitude calculator 210 calculates, for example, a value obtained by adding the amplitude i_ca_amp (Id1, Iq1) and the amplitude i_ca_amp (Id2, Iq1) and multiplying the sum by 1/2, as the amplitude i_ca_amp (IdM, Iq1).

FIG. 6 shows an example of a torque phase table 211Tbl. The torque phase table 211Tbl is a table showing a correspondence relationship between the current condition and the amplitude value of the motor current for suppressing the torque pulsation. For example, in the same manner as the method described in FIGS. 3 and 4, the initial phase of the motor current for suppressing the torque pulsation is calculated in advance under various current conditions in which the current is assumed to be applied to the motor 1, and a phase obtained by advancing the calculated initial phase by 90 degrees is stored in the torque phase table 211Tbl.

For example, in a case where the initial phase under the current condition (Id1, Iq1) is a phase i_ca_ph (Id1, Iq1), a phase {i_ca_ph (Id1, Iq1) + 90}, which is a phase advanced by 90 degrees by adding 90 to the phase i_ca_ph (Id1, Iq1), is stored in the torque phase table 211Tbl. In addition, in a case where the initial phase under the current condition (Id2, Iq1) is a phase i_ca_ph (Id2, Iq1), a phase {i_ca_ph (Id2, Iq1) + 90} is stored in the torque phase table 211Tbl.

When the motor 1 is rotated, the current command values id_ref and iq_ref are input to the torque suppression command phase calculator 211. The torque suppression command phase calculator 211 refers to the torque phase table 211Tbl based on the current command values id_ref and iq_ref, and acquires an initial phase {i_ca_ph (id_ref, iq_ref) + 90} corresponding to a current condition (id_ref, iq_ref).

The torque suppression command phase calculator 211 outputs the acquired phase {i_ca_ph (id_ref, iq_ref) + 90} as an initial phase i_ca_phase of the current command value for suppressing the torque pulsation in the motor 1 under the current condition (id_ref, iq_ref). That is, there is a relationship of i_ca_phase = i_ca_ph + 90.

Here, the torque phase table 211Tbl stores a phase obtained by advancing the phase i_ca_ph by 90 degrees.

This is for the purpose of applying a motor current corresponding to the torque pulsation suppression command value i_cancel2 to the motor 1. More specifically, the cancellation voltage command value vq_cancel including a component of the torque pulsation suppression command value i_cancel2 is added to the fundamental wave command value vq. Therefore, the phase of the torque pulsation suppression command value i_cancel2 is advanced by 90 degrees. Here, 90 degrees is a phase corresponding to 1/4 of a period in a case where one period in a waveform of an Nth-order frequency component in terms of electrical angle to be suppressed is set to 360 degrees.

The torque suppression command value calculator 21 calculates the torque pulsation suppression command values i_cancel and i_cancel2 shown in Equations (1-3) and (1-4). The constant N is the order to be suppressed. θ is a rotor position θ determined by the rotation position determination unit 2.

$$i\_cancel = i\_ca\_amp \times \cos(N\theta + i\_ca\_phase) \text{ ... Equation (1-3)}$$

$$i\_cancel2 = i\_ca\_amp \times \cos(N\theta + i\_ca\_phase - 90) \text{ ... Equation (1-4)}$$

Here, a process of deriving the torque pulsation suppression command value i_cancel shown in Equation (1-3) will be specifically described.

The adder 212 adds the phase i_ca_phase calculated by the torque suppression command phase calculator 211 to a value (Nθ) obtained by multiplying the rotor position θ by the constant N. Here, the value (Nθ) obtained by multiplying the rotor position θ by the constant N is calculated by the amplifier 28 described below and is output to the adder 212. The adder 212 outputs a phase after the addition (Nθ + i_ca_phase) to the cosine calculator 213.

The cosine calculator 213 calculates a sine wave cos(Nθ + i_ca_phase) having the phase (Nθ + i_ca_phase) output from the adder 212, and outputs the calculated sine wave cos(Nθ + i_ca_phase) to the multiplier 214.

The multiplier 214 multiplies the sine wave cos(Nθ + i_ca_phase) output from the cosine calculator 213 by the amplitude i_ca_amp. The multiplier 214 outputs the sine wave {i_ca_amp × cos(Nθ + i_ca_phase)} after the multiplication as a cancellation voltage command value i_cancel.

Here, a process of deriving the torque pulsation suppression command value i_cancel2 shown in Equation (1-4) will be specifically described.

The subtractor 215 subtracts 90 from the phase (Nθ + i_ca_phase) output from the adder 212 to output a phase (Nθ + i_ca_phase - 90) to the cosine calculator 216.

The cosine calculator 216 calculates a sine wave cos(Nθ + i_ca_phase - 90) having the phase (Nθ + i_ca_phase - 90) output from the adder 212, and outputs the calculated sine wave cos(Nθ + i_ca_phase - 90) to the multiplier 217.

The multiplier 217 multiplies the sine wave cos(Nθ + i_ca_phase - 90) output from the cosine calculator 216 by the amplitude i_ca_amp. The multiplier 217 outputs the sine wave {i_ca_amp × cos(Nθ + i_ca_phase - 90)} after the multiplication as a cancellation voltage command value i_cancel2.

Here, as described above, the phase i_ca_phase is obtained by advancing the phase i_ca_ph by 90 degrees, and there is a relationship of i_ca_phase = i_ca_ph + 90, so that Equation (1-4) is equivalent to Equation (1-5).

$$i\_cancel2 = i\_ca\_amp \times \cos(N\theta + i\_ca\_ph) \text{ ... Equation (1-5)}$$

The torque pulsation suppression command value i_cancel2 calculated by the cancellation calculator 20 corresponds to the motor currents shown in the middle and lower parts of FIG. 3 and the middle and lower parts of FIG. 4. That is, the torque pulsation suppression command value i_cancel2 is a current command value corresponding to a sine wave that is in an opposite phase to the torque pulsation in the motor 1 and whose amplitude is 1/Kt times the torque pulsation. In addition, the torque pulsation suppression command value i_cancel is a current command value corresponding to a sine wave advanced by 90 degrees in phase with respect to the torque pulsation suppression command value i_cancel2.

The cancellation calculator 20 outputs the torque pulsation suppression command value i_cancel out of the torque pulsation suppression command values i_cancel and i_cancel2 to the adder 15. The adder 15 adds the torque pulsation suppression command value i_cancel to the current command value iq_ref, and outputs a current command value iq_ref2 after the addition to the current controller 9. Here, it is assumed that a set response frequency in the q-axis current controller 93 is a frequency fq.

In this case, in a case where the Nth-order frequency in terms of electrical angle is equal to or lower than the frequency fq, the Nth-order frequency component in terms of electrical angle in the motor current Iq matches the torque pulsation suppression command value i_cancel2. The torque pulsation suppression command value i_cancel2 is a sine wave that is in an opposite phase to the torque pulsation in the motor 1 and whose amplitude is 1/Kt times the torque pulsation, which is shown in the middle and lower parts of FIG. 3 or the middle and lower parts of FIG. 4. Therefore, since the torque pulsation shown in the upper part of FIG. 3 or the upper part of FIG. 4 can be canceled, it is possible to suppress the torque pulsation in the motor 1.

On the other hand, in a case where the Nth-order frequency in terms of electrical angle exceeds the frequency fq, it exceeds the performance range of the q-axis current controller 93. The cancellation voltage command value vq_cancel is used to perform control such that the Nth-order frequency component in terms of electrical angle included in the motor current Iq matches the torque pulsation suppression command value i_cancel2 in a band where the Nth-order frequency in terms of electrical angle exceeds the frequency fq.

The disturbance suppression command value calculator 22 calculates a disturbance suppression command value i_gairan based on the current command values id_ref and iq_ref and the rotor position θ. The disturbance suppression command value i_gairan is a current command value for suppressing a disturbance.

The disturbance suppression command value calculator 22 includes a disturbance suppression command amplitude calculator 220, a disturbance suppression command phase calculator 221, an adder 222, a cosine calculator 223, and a multiplier 224.

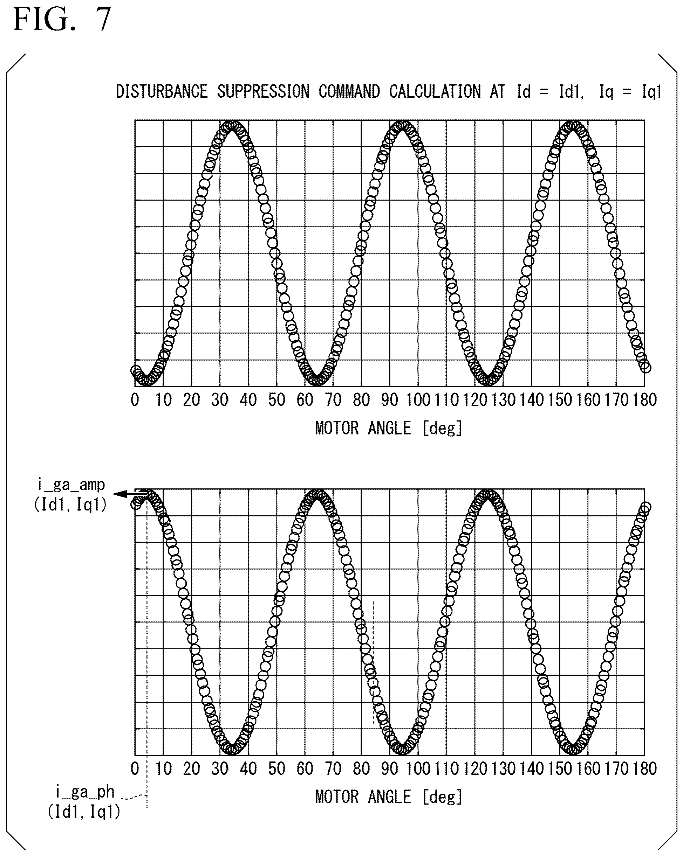

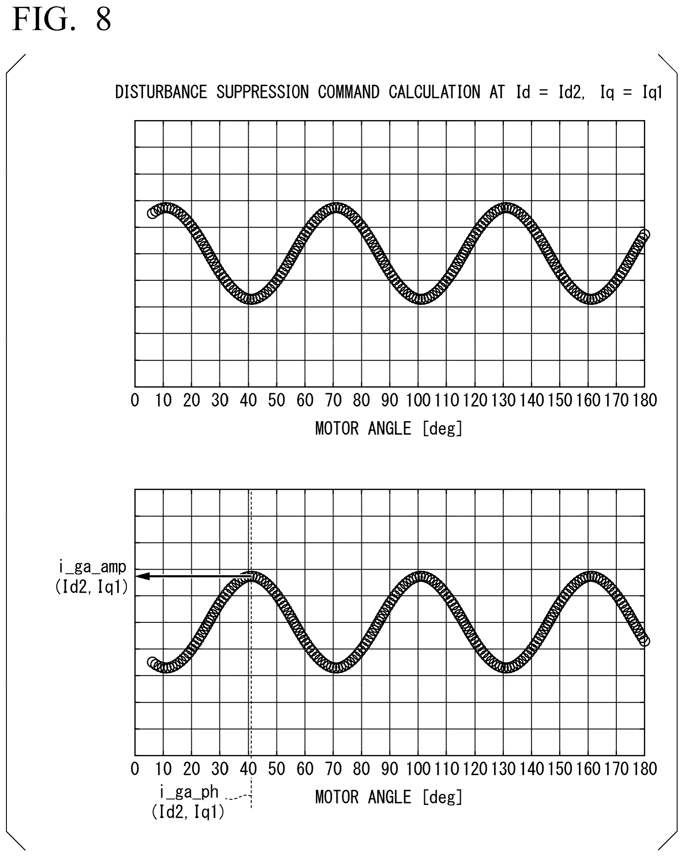

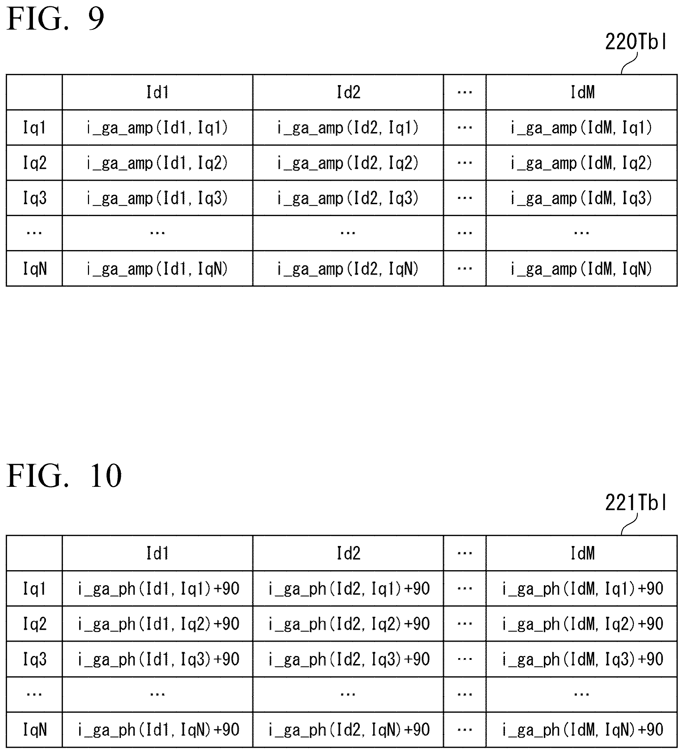

The disturbance suppression command amplitude calculator 220 calculates an amplitude i_ga_amp, which is an amplitude value of the disturbance suppression command value i_gairan, based on the current command values id_ref and iq_ref. A method for the disturbance suppression command amplitude calculator 220 to calculate the amplitude i_ga_amp will be described with reference to FIGS. 7 to 10. FIGS. 7 and 8 are diagrams showing an example of a waveform affected by a disturbance according to Embodiment 1. FIG. 9 is a diagram showing an example of an amplitude table for suppressing an influence of a disturbance according to Embodiment 1. FIG. 10 is a diagram showing an example of a phase table for suppressing an influence of a disturbance according to Embodiment 1.

An upper part of FIG. 7 shows an example of a waveform affected by a disturbance, which includes a sixth-order frequency component in terms of electrical angle extracted from the motor current Iq on the q-axis when the motor 1 is driven under a specific current condition. The current condition of the motor 1 here is such that the motor current Id on the d-axis of the motor 1 is set to a constant value Id1, the motor current Iq on the q-axis is set to a constant value Iq1, the rotational angular velocity of the motor 1 is constant, and the fundamental wave command values vd and vq are constant. In addition, the influence of the disturbance here includes a sixth-order frequency component in terms of electrical angle of a magnetic flux φm of a magnet in the motor 1, a sixth-order frequency component in terms of electrical angle of the inductance in the motor 1, and the like. These are sixth-order frequency components in terms of electrical angle caused by the fluctuation and distortion of the impedance in the motor 1, that is, the disturbance.

A lower part of FIG. 7 shows an example of a waveform in which a sign of the waveform shown in the upper part of FIG. 7 is inverted. In addition, the lower part of FIG. 7 shows an example in which the waveform is formulated to extract an amplitude and an initial phase of the waveform. An amplitude value of the motor current for suppressing the disturbance under the current condition (Id1, Iq1) is an amplitude i_ga_amp (Id1, Iq1). An initial phase value of the motor current for suppressing the influence of the disturbance under the current condition (Id1, Iq1) is a phase i_ga_ph (Id1, Iq1).

An upper part of FIG. 8 shows an example of a waveform affected by a disturbance, which includes a sixth-order frequency component in terms of electrical angle extracted from the motor current Iq on the q-axis when the motor 1 is driven under a current condition (Id2, Iq1) different from that of FIG. 7.

A lower part of FIG. 8 shows an example of a waveform in which a sign of the waveform shown in the upper part of FIG. 8 is inverted. In addition, the lower part of FIG. 8 shows an example in which the waveform is formulated to extract an amplitude and an initial phase of the waveform. An amplitude value of the motor current for suppressing the disturbance under the current condition (Id2, Iq1) is an amplitude i_ga_amp (Id2, Iq1). An initial phase value of the motor current for suppressing the influence of the disturbance under the current condition (Id2, Iq1) is a phase i_ga_ph (Id2, Iq1).

FIG. 9 shows an example of a disturbance suppression amplitude table 220Tbl. The disturbance suppression amplitude table 220Tbl is a table showing a correspondence relationship between the current condition and the amplitude value of the motor current for suppressing the influence of the disturbance. For example, in the same manner as the method described in FIGS. 7 and 8, the amplitude value of the motor current for suppressing the disturbance pulsation is calculated in advance under various current conditions in which the current is assumed to be applied to the motor 1, and the calculated amplitude value is stored in the disturbance suppression amplitude table 220Tbl.

When the motor 1 is rotated, the current command values id_ref and iq_ref are input to the disturbance suppression command amplitude calculator 220. The disturbance suppression command amplitude calculator 220 refers to the disturbance suppression amplitude table 220Tbl based on the input current command values id_ref and iq_ref, and acquires an amplitude i_ga_amp (id_ref, iq_ref) corresponding to a current condition (id_ref, iq_ref). The disturbance suppression command amplitude calculator 220 outputs the acquired amplitude i_ga_amp (id_ref, iq_ref) as the amplitude i_ga_amp of the current command value for suppressing the influence of the disturbance in the motor 1.

Here, the disturbance suppression command amplitude calculator 220 may calculate the amplitude i_ga_amp by performing linear interpolation. The disturbance suppression command amplitude calculator 220 calculates the amplitude i_ga_amp using linear interpolation, for example, in a case where the current command value iq_ref under the current condition for which the amplitude is to be calculated is a current value that is midway between the motor currents Iq1 and Iq2 in the disturbance suppression amplitude table 220Tbl. For example, the amplitude value under a current condition (IdM, Iq1) located between the current condition (Id1, Iq1) in FIG. 7 and the current condition (Id2, Iq1) in FIG. 8 may be calculated by linear interpolation. Here, IdM is, for example, (Id1 + Id2)/2. In this case, the disturbance suppression command amplitude calculator 220 calculates, for example, a value obtained by adding the amplitude i_ga_amp (Id1, Iq1) and the amplitude i_ga_amp (Id2, Iq1) and multiplying the sum by 1/2, as the amplitude i_ga_amp (IdM, Iq1).

FIG. 10 shows an example of a disturbance suppression phase table 221Tbl. The disturbance suppression phase table 221Tbl is a table showing a correspondence relationship between the current condition and the amplitude value of the motor current for suppressing the torque pulsation. For example, in the same manner as the method described in FIGS. 7 and 8, the initial phase of the motor current for suppressing the influence of the disturbance is calculated in advance under various current conditions in which the current is assumed to be applied to the motor 1, and a phase obtained by advancing the calculated initial phase by 90 degrees is stored in the disturbance suppression phase table 221Tbl.

For example, in a case where the initial phase under the current condition (Id1, Iq1) is a phase i_ga_ph (Id1, Iq1), a phase {i_ga_ph (Id1, Iq1) + 90} is stored in the disturbance suppression phase table 221Tbl. In a case where the initial phase under the current condition (Id2, Iq1) is a phase i_ga_ph (Id2, Iq1), a phase {i_ga_ph (Id2, Iq1) + 90} is stored in the disturbance suppression phase table 221Tbl.

When the motor 1 is rotated, the current command values id_ref and iq_ref are input to the disturbance suppression command phase calculator 221. The disturbance suppression command phase calculator 221 refers to the disturbance suppression phase table 221Tbl based on the current command values id_ref and iq_ref, and acquires an initial phase {i_ga_ph (id_ref, iq_ref) + 90} corresponding to a current condition (id_ref, iq_ref).

The disturbance suppression command phase calculator 221 outputs the acquired phase {i_ga_ph (id_ref, iq_ref) + 90} as an initial phase i_ga_phase of the current command value for suppressing the influence of the disturbance in the motor 1 under the current condition (id_ref, iq_ref). That is, there is a relationship of i_ga_phase = i_ga_ph + 90.

Here, the disturbance suppression phase table 221Tbl stores a phase obtained by advancing the phase i_ga_ph by 90 degrees. This is for the purpose of applying a motor current corresponding to the disturbance suppression command value i_gairan to the motor 1. More specifically, the cancellation voltage command value vq_cancel including a component of the disturbance suppression command value i_gairan is added to the fundamental wave command value vq. Therefore, the phase of the disturbance suppression command value i_gairan is advanced by 90 degrees.

The disturbance suppression command value calculator 22 calculates the disturbance suppression command value i_gairan shown in Equation (1-6). The constant N is the order to be suppressed. θ is a rotor position θ determined by the rotation position determination unit 2.

$$i\_gairan = i\_ga\_amp \times \cos(N\theta + i\_ga\_phase) \ ... \ \text{Equation (1-6)}$$

Here, a process of deriving the disturbance suppression command value i_gairan shown in Equation (1-6) will be specifically described.

The adder 222 adds the phase i_ga_phase calculated by the disturbance suppression command phase calculator 221 to a value (Nθ) obtained by multiplying the rotor position θ by the constant N. The adder 2212 outputs a phase after the addition (Nθ + i_ga_phase) to the cosine calculator 223.

The cosine calculator 223 calculates a sine wave cos(Nθ + i_ga_phase) having the phase (Nθ + i_ga_phase) output from the adder 222, and outputs the calculated sine wave cos(Nθ + i_ga_phase) to the multiplier 224.

The multiplier 224 multiplies the sine wave cos(Nθ + i_ga_phase) output from the cosine calculator 223 by the amplitude i_ga_amp. The multiplier 224 outputs the sine wave {i_ga_amp × cos(Nθ + i_ga_phase)} after the multiplication as the disturbance suppression command value i_gairan.

In the cancellation calculator 20, composite values i_sum and v_sum shown in Equations (1-7), (1-8), and (1-9) are calculated. The constant N is the order to be suppressed. ω is the rotational angular velocity ω determined by the speed calculator 12. The constant L is the inductance of the motor 1. The constant R is a resistance value of a winding resistance of the motor 1.

$$i\_sum = i\_cancel + i\_gairan \ ... \ \text{Equation (1-7)}$$

$$v\_sum = N\cdot\omega\cdot L\cdot i\_sum$$

$$= N\cdot\omega\cdot L\cdot(i\_cancel + i\_gairan) \ ... \ \text{Equation (1-8)}$$

$$v\_sum2 = v\_sum + R \cdot i\_cancel2$$

$$= R \cdot i\_cancel2 + N \cdot \omega \cdot L \cdot (i\_cancel + i\_gairan) \ ... \ \text{Equation (1-9)}$$

A process of deriving the composite value i_sum shown in Equation (1-7) will be specifically described. The adder 23 adds the disturbance suppression command value i_gairan to the torque pulsation suppression command value i_cancel, and outputs a composite value i_sum (= i_cancel + i_gairan) after the addition to the multiplier 24.

A process of deriving the composite value v_sum shown in Equation (1-8) will be specifically described. The multiplier 24 multiplies the composite value i_sum output from the adder 23 by the value (NωL) output from the amplifier 17, and outputs a composite value v_sum (= N·ω·L·i_sum) after the multiplication to the adder 25.

A process of deriving the composite value v_sum2 shown in Equation (1-9) will be specifically described. The amplifier 27 outputs a value obtained by multiplying the torque pulsation suppression command value i_cancel by R to the adder 25. The adder 25 adds the value (R·i_cancel) output from the amplifier 27 to the composite value v_sum, and outputs a composite value v_sum2 after the addition to the limiter 26.

The limiter 26 compares the composite value v_sum2 output from the adder 25 with an upper limit value (+vq_clip) and a lower limit value (-vq_clip), limits the composite value v_sum2 to a value between the lower limit value and the upper limit value based on a comparison result, and outputs a value after the limitation as the cancellation voltage command value vq_cancel. Specifically, the limiter 26 limits the composite value v_sum2 to a value between the lower limit value and the upper limit value by using Equation (1-10).

In a case of (v_sum2 < -vq_clip),

$$\rightarrow vq\_cancel = -vq\_clip$$

In a case of (-vq_clip < v_sum2 < vq_clip),

$$\rightarrow vq\_cancel = v\_sum2$$

In a case of (vq_clip < v_sum2),

$$\rightarrow vq\_cancel = vq\_clip \ ... \ \text{Equation (1-10)}$$

Here, the limit value vq_clip set as the upper limit value and the lower limit value will be described. The limit value vq_clip is calculated as shown in Equation (1-11) using the order N of the electrical angle to be suppressed, the maximum rotational angular velocity ωmax at the rotational angular velocity ω used for the calculation in the cancellation calculator 20, the inductance L of the motor 1, and the maximum composite value i_sum_max at the composite value i_sum.

$$vq\_clip = N \cdot \omega max \cdot L \cdot i\_sum\_max \ ... \ \text{Equation (1-11)}$$

Alternatively, the rotational angular velocity ω of the motor 1 may be input to the limiter 26, and the limit value vq_clip may be calculated using an Equation in which the maximum rotational angular velocity ωmax in Equation (1-11) is replaced with the rotational angular velocity ω.

In addition, when Equation (1-9) is taken into consideration in Equation (1-10), the following equation (1-12) is obtained.

In a case of (v_sum2 < -vq_clip),

$$\rightarrow vq\_cancel = -vq\_clip$$

In a case of (-vq_clip < v_sum2 < vq_clip),

$$\rightarrow vq\_cancel = R \cdot i\_cancel2 + N \cdot \omega \cdot L \cdot (i\_cancel + i\_gairan)$$

In a case of (vq_clip < v_sum2),

$$\rightarrow vq\_cancel = vq\_clip \ ... \ \text{Equation (1-12)}$$

As shown in Equation (1-12), the limiter 26 limits a composite value v_sum2 including a value obtained by multiplying an added value of the disturbance suppression command value i_gairan and the torque pulsation suppression command value i_cancel by a coefficient including the rotational angular velocity ω of the motor, to the limit value vq_clip. Here, the limit value vq_clip is a value calculated based on the rotational angular velocity ω of the motor 1 and the inductance L which is an electrical constant. That is, the cancellation voltage command value vq_cacel is calculated based on the sum of the "disturbance suppression command value and torque pulsation suppression command value" after the limitation.

The coordinate transformation device 10 outputs the cancellation voltage command value vq_cancel to the adder 14. The adder 14 adds the cancellation voltage command value vq_cancel to the fundamental wave command value vq, and outputs a fundamental wave command value vq' after the addition to the coordinate transformation device 10.

Here, the effects of the motor control device 100 according to Embodiment 1 will be described. A voltage equation related to the q-axis in the motor 1 is represented by the following equation (1-13). R is a resistance value of a winding resistance in the motor 1. L is the inductance in the motor 1. φ is the flux linkage in the motor 1. s is a Laplace operator. Vq is a q-axis motor voltage. iq is a q-axis motor current. id is a d-axis motor current.

$$Vq = R \cdot iq + sL \cdot iq + \omega(L \cdot id + \varphi) \ ... \ \text{Equation (1-13)}$$

Here, in Equation (1-13), it is assumed that the motor current id = 0 (zero) and there is no pulsating component in the flux linkage φ. In this case, it is assumed that the inductance L includes a sixth-order frequency component L_6f in terms of electrical angle in the inductance L, in addition to L_dc which is a DC component. In this case, L can be represented by L_dc + L_6f, and Equation (1-13) can be represented by the following equation (1-14).

$$Vq = R \cdot iq + s(L\_dc + L\_6f) \cdot iq + \omega\varphi \ ... \ \text{Equation (1-14)}$$

In Equation (1-14), a situation in which the motor 1 is rotating at a high speed is considered. In this case, a first term on a right side of Equation (1-14) can be ignored because it is relatively small compared to a second term on the right side. In addition, in a case where the motor 1 is rotating at a high speed, the sixth-order frequency component in terms of electrical angle with respect to the high-speed rotation is larger than the response frequency in the q-axis current controller 93 and the operation amount by the q-axis current controller 93 corresponds to the d-axis motor voltage Vq, a sixth-order frequency component Vq_6f in terms of electrical angle included in the d-axis motor voltage Vq is sufficiently small and can be regarded as 0 (zero). In consideration of the above-described points, Equation (1-14) can be represented by the following equation (1-15). iq_dc is a DC component included in the q-axis motor current iq. iq_6f is a sixth-order frequency component in terms of electrical angle included in the q-axis motor current iq. That is, iq = iq_dc + iq_6f.

$$Vq\_6f \approx 0$$

$$\approx s(L\_dc + L\_6f) \cdot (iq\_dc + iq\_6f) \ ... \ \text{Equation (1-15)}$$

When Equation (1-15) is solved for the sixth-order frequency component iq_6f in terms of electrical angle included in the q-axis motor current iq, Equation (1-16) is obtained.

$$iq\_6f = -L\_6f/L\_dc \cdot iq\_dc \ ... \ \text{Equation (1-16)}$$

In Equation (1-16), the presence of L_6f causes the sixth-order frequency component iq_6f in terms of electrical angle included in the q-axis motor current iq. Here, in a case where the sixth-order frequency component in terms of electrical angle is smaller than the response frequency in the q-axis current controller 93, feedback control is executed such that the frequency component iq_6f is 0 (zero), and the frequency component iq_6f approaches 0 (zero). That is, the sixth-order frequency component Vq_6f in terms of electrical angle in the d-axis motor voltage Vq is generated to suppress the frequency component iq_6f.

On the other hand, in a case where this magnitude relationship is inverted and the sixth-order frequency component in terms of electrical angle is larger than the response frequency in the q-axis current controller 93, the frequency component iq_6f cannot be suppressed in the feedback control through the q-axis current controller 93. Therefore, the frequency component iq_6f according to Equation (1-16) is applied to the motor 1.

As described above, in a case where the frequency of the frequency component iq_6f exceeds a control band in the current controller 9 because of the fluctuation of the impedance in the motor 1, the frequency component iq_6f shown in Equation (1-16) is reflected in the rotation of the motor 1. In the present embodiment, the q-axis motor current including such a frequency component iq_6f is defined as a disturbance current due to impedance distortion. The q-axis motor current including the frequency component iq_6f may be referred to as a disturbance current iq_6f. Measurement results of the disturbance current iq_6f are as shown in the upper part of each of FIGS. 7 and 8.

Based on such a concept, in the present embodiment, the disturbance suppression command value calculator 22 generates the disturbance suppression amplitude table 220Tbl and the disturbance suppression phase table 221Tbl in advance. The disturbance suppression command value calculator 22 calculates the amplitude and the phase of the waveform in which the disturbance current is inverted, as shown in the lower part of each of FIGS. 7 and 8. As shown in FIG. 9, the disturbance suppression command value calculator 22 creates a table in which the amplitude value itself is mapped as the disturbance suppression amplitude table 220Tbl for the amplitude. In addition, as shown in FIG. 10, the disturbance suppression command value calculator 22 creates a table in which a phase advanced by 90 degrees from the initial phase is mapped for the phase as the disturbance suppression phase table 221Tbl. The disturbance suppression command value calculator 22 calculates the disturbance suppression command value i_gairan by referring to the disturbance suppression amplitude table 220Tbl and the disturbance suppression phase table 221Tbl based on the current command values id_ref and iq_ref. In the cancellation calculator 20, the amplitude of the composite value i_sum including the disturbance suppression command value i_gairan is multiplied by NωL. In the cancellation voltage command value vq_cancel, an item vq_cancel_d caused by the disturbance suppression command value i_gairan is represented by the following equation (1-17).

$$vq\_cancel\_d = N \cdot \omega \cdot L \cdot i\_gairan \ ... \ \text{Equation (1-17)}$$

On the other hand, a voltage Vgairan required to cancel the disturbance current iq_6f represented by Equation (1-16) will be described. The impedance Z(N) in the motor 1 with respect to the Nth-order frequency component in terms of electrical angle is represented by the following equation (1-18). j is a pure imaginary number, and has a relationship of j × j = -1. The constant N is the order to be suppressed. The constant L is the inductance of the motor 1. ω is the rotational angular velocity of the motor 1. R is a resistance value of a winding resistance of the motor 1.

$$Z(N) = R + j \cdot N\omega L \ ... \ \text{Equation (1-18)}$$

In addition, the voltage Vgairan required to cancel the disturbance current iq_6f is represented by the following equation (1-19). Z(N) is the impedance represented by Equation (1-18). iq_6f is a disturbance current.

$$Vgairan = Z(N) \cdot (-iq\_6f)$$

$$= (R + j \cdot N\omega L) \cdot iq\_6f$$

$$\approx j \cdot N\omega L \cdot (-iq\_6f) \ ... \ \text{Equation (1-19)}$$

In Equation (1-19), the term for the resistance value R is omitted in the equation shown after "≈". This is because the influence of the resistance value R of the winding resistance in the motor 1 is sufficiently small as compared with NωL and can be ignored in a region where the sixth-order frequency component in terms of electrical angle included in the q-axis motor current iq is sufficiently higher than the response frequency in the q-axis current controller 93.

In Equation (1-19), the voltage required to suppress the disturbance current iq_6f is obtained by advancing the phase by 90 degrees and multiplying the amplitude by NωL with respect to a current (-iq_6f) obtained by inverting the sign of the disturbance current iq_6f. Here, the reason why the phase is advanced by 90 degrees is that the pure imaginary number j is considered to be a shift operator that shifts the phase by 90 degrees. In consideration of this, when Equation (1-17) and Equation (1-19) are compared with each other, the disturbance suppression command value i_gairan is obtained by advancing the phase by 90 degrees with respect to the value obtained by inverting the sign of the disturbance current iq_6f. Therefore, the disturbance suppression command value i_gairan corresponds to the term of "j·(-iq_6f)" in Equation (1-19). Therefore, it can be said that Equation (1-17) and Equation (1-19) are equivalent.

Therefore, in the present embodiment, by including Equation (1-17), which has a term including the disturbance suppression command value i_gairan calculated by the disturbance suppression command value calculator 22, in Equation (1-12) for the cancellation voltage command value vq_cancel, it is possible to suppress the influence of the disturbance current iq_6f.

Subsequently, the effects of the torque pulsation suppression command values i_cancel and i_cancel2 output from the torque suppression command value calculator 21 will be described. A torque equation in the motor 1 is represented by the following equation (1-20). Kt is a torque constant. T is a torque. iq is a q-axis motor current.

$$T = Kt \cdot iq \text{ ... Equation (1-20)}$$

Note that, in Equation (1-20), an approximate torque T is shown assuming that a magnet torque is larger than a relaxant torque in the motor 1. In a case of a motor having a large ratio of the relaxant torque, the torque equation including the d-axis motor current id can be applied.

In Equation (1-20), it is assumed that the torque constant Kt includes a sixth-order frequency component Kt_6f in terms of electrical angle in addition to Kt_dc which is a DC component. In this case, Kt can be represented by Kt_dc + Kt_6f, and Equation (1-20) can be represented by the following equation (1-21).

$$T = Kt \cdot iq$$

$$= (Kt\_dc + Kt\_6f) \cdot iq$$

$$= (Kt\_dc \cdot iq + Kt\_6f \cdot iq \text{ ... Equation (1-21)}$$

In Equation (1-21), in a case where the q-axis motor current iq is set to be constant, a first term on a right side of Equation (1-21) is a DC torque T_dc, and a second term on the right side is a pulsating torque T_6f that pulsates at the sixth-order electrical angle. When a DC component of the q-axis motor current iq is denoted by iq_dc, in a case where the q-axis motor current iq is constant, iq_dc = iq can be represented. In this case, the pulsating torque T_6f of the second term on the right side in Equation (1-21) can be represented by the following equation (1-22).

$$T\_6f = Kt\_6f \cdot iq\_dc \text{ ... Equation (1-22)}$$

On the other hand, in a case where a current pulsation component iq_t6f that pulsates at the sixth-order electrical angle is added to the DC component iq_dc as the q-axis motor current iq, Equation (1-21) is represented by the following equation (1-23).

$$T = Kt \cdot iq$$

$$= (Kt\_dc + Kt\_6f) \cdot (iq\_dc + iq\_t6f)$$

$$\approx Kt\_dc \cdot iq\_dc + Kt\_6f \cdot iq\_dc + Kt\_dc \cdot iq\_t6f$$

$$\approx Kt\_dc \cdot iq + T\_6f + Kt\_dc \cdot iq\_t6f \text{ ... Equation (1-23)}$$

Note that, in Equation (1-23), the term for Kt_6f·iq_t6f is omitted in the equation shown after "≈". This is because the product of the sixth-order frequency component Kt_6f in terms of electrical angle and the current pulsation component iq_t6f in the torque constant Kt is sufficiently small and can be ignored.

Here, a case where a second term on a right side of Equation (1-23), that is, the pulsating torque T_6f in Equation (1-22) is canceled by adding the current pulsation component iq_t6f, thereby making the torque T constant is considered. In this case, the condition has only to be met under which the sum of the second term on the right side and a third term on the right side in Equation (1-23) is 0. That is, the condition of T_6f + Kt_dc·iq_t6f= 0 has only to be met. When this is solved for the current pulsation component iq_t6f, the current pulsation component iq_t6f is represented by the following equation (1-24).

$$iq\_t6f = -T\_6f / Kt\_dc \text{ ... Equation (1-24)}$$

As in Equation (1-24), in a case where the torque cancellation current iq_t6f, which is the sixth-order frequency component in terms of electrical angle in the q-axis motor current iq, can be set, the sixth-order frequency component in terms of electrical angle included in the torque T can be set to 0 (zero), making it possible to suppress the torque pulsation.

Based on such a concept, in the present embodiment, the torque suppression command value calculator 21 generates the torque amplitude table 210Tbl and the torque phase table 211Tbl. The torque suppression command value calculator 21 calculates the amplitude and the phase of the waveform obtained by inverting the waveform of the torque pulsation and multiplying the waveform by 1/Kt, as shown in the lower part of each of FIGS. 3 and 4. As shown in FIG. 5, the torque suppression command value calculator 21 creates a table in which the amplitude value itself is mapped as the torque amplitude table 210Tbl for the amplitude. In addition, as shown in FIG. 6, the torque suppression command value calculator 21 creates a table in which a phase advanced by 90 degrees from the initial phase is mapped for the phase as the torque phase table 211Tbl. The torque suppression command value calculator 21 calculates the disturbance suppression command value i_gairan by referring to the torque amplitude table 210Tbl and the torque phase table 211Tbl based on the current command values id_ref and iq_ref. In the cancellation calculator 20, the amplitude of the composite value i_sum including the torque pulsation suppression command value i_cancel is multiplied by NωL. In the cancellation voltage command value vq_cancel, an item vq_cancel_T caused by the torque pulsation suppression command values i_cancel and i_cancel2 is represented by the following equation (1-25).

$$\text{vq\_cancel\_T} = R \cdot \text{i\_cancel2} + N \cdot \omega \cdot L \cdot \text{i\_cancel} \ ... \ \text{Equation (1-25)}$$

On the other hand, a voltage Vtorque required for applying the torque cancellation current iq_t6f as represented by Equation (1-24) will be described. The impedance Z(N) in the motor 1 with respect to the Nth-order frequency component in terms of electrical angle is represented by Equation (1-26) by using Equation (1-18). j is a pure imaginary number. The constant N is the order to be suppressed. The constant L is the inductance of the motor 1. ω is the rotational angular velocity of the motor 1. R is a resistance value of a winding resistance of the motor 1.

$$\text{Vtorque} = Z(N) \cdot \text{iq\_t6f}$$

$$= (R + j \cdot N\omega L) \cdot \text{iq\_t6f}$$

$$= R \cdot \text{iq\_t6f} + j \cdot N\omega L \cdot \text{iq\_t6f} \ ... \ \text{Equation (1-26)}$$

Here, when a signal with a phase advanced by 90 degrees without changing the amplitude of the torque cancellation current iq_t6f is denoted by a current iq_t6f_90, Equation (1-26) can be represented by the following equation (1-27).

$$\text{Vtorque} = R \cdot \text{iq\_t6f} + j \cdot N\omega L \cdot \text{iq\_t6f}$$

$$= R \cdot \text{iq\_t6f} + N\omega L \cdot \text{iq\_t6f\_90} \ ... \ \text{Equation (1-27)}$$

When Equation (1-25) is compared with Equation (1-27), the torque cancellation current iq_t6 is equal to the torque pulsation suppression command value i_cancel2. In addition, the current iq_t6f_90 obtained by advancing the phase of the torque cancellation current iq_t6 by 90 degrees is equal to the torque pulsation suppression command value i_cancel. Therefore, it can be said that Equation (1-25) and Equation (1-27) are equivalent.

Therefore, in the present embodiment, by including Equation (1-25), which has a term including the torque pulsation suppression command values i_cancel and i_cancel2 calculated by the torque suppression command value calculator 21, in Equation (1-12) for the cancellation voltage command value vq_cancel, it is possible to make the sixth-order frequency component in terms of electrical angle included in the motor current match the cancellation current. Therefore, there is an effect of reducing a ripple component of the torque caused by the pulsation of the torque constant Kt in the motor 1.

Here, in FIG. 1, the adder 15 adds the torque pulsation suppression command value i_cancel2 to the current command value iq_ref. As a result, in a region where the frequency of the current command value iq_ref2 is smaller than the control band of the q-axis current controller 93, the q-axis motor current iq and iq_ref2 = iq_ref + i_cancel2 are matched by the q-axis current controller 93. On the other hand, in a region where the frequency of the current command value iq_ref2 is larger than the control band of the q-axis current controller 93, it is difficult for the q-axis current controller 93 to make the q-axis motor current iq match iq_ref2 = iq_ref + i_cancel2. In this case as well, the adder 14 adds the cancellation voltage command value vq_cancel to the fundamental wave command value vq. As a result, the fundamental wave command value vq can include the term of Equation (1-25). Therefore, the feedforward control works, and as a result, the q-axis motor current iq matches iq_ref2 = iq_ref + iq_cancel2. Therefore, the pulsation component of the torque is reduced.

In addition, in a case where R << NωL is established in a region where the sixth-order frequency component in terms of electrical angle is larger than the response frequency of the q-axis current controller 93 and the effect of the cancellation voltage command value vq_cancel is expected, it can be said that there is no significant difference in effect even in a case where the term "R·i_cancel2" in Equation (1-12) representing the cancellation voltage command value vq_cancel is omitted.

As described above, in Embodiment 1, the motor control device 100 includes the cancellation calculator 20. The cancellation calculator 20 calculates the cancellation voltage command value vq_cancel. The cancellation voltage command value is used for suppressing a disturbance current caused by the impedance distortion in the motor 1 and suppressing torque pulsation caused by the pulsation in a torque constant Kt in the motor 1. Therefore, the motor control device 100 according to Embodiment 1 can reduce the torque pulsation in the motor 1, particularly in the high-speed rotation range.

Such a configuration provides an effect of reducing torque pulsation in both the low speed range and the high speed range. On the other hand, in the present embodiment, in order to suppress the torque pulsation, a value obtained by dividing the torque pulsation generated in the motor 1 by the torque constant Kt and the torque based on the cancellation voltage command value need to have a relationship in which the amplitudes are the same and the phases are opposite to each other. That is, it is important to appropriately set the amplitude i_ca_amp and the phase i_ca_phase in Equation (1-3).

In addition, even for the disturbance suppression command value for reducing the torque pulsation in the high speed range, it is necessary to accurately predict the current pulsation in a case where the rotation speed of the motor 1 is kept constant and the fundamental wave command values vd and vq are kept constant. That is, it is important to appropriately set the amplitude i_ga_amp and the initial phase i_ga_ph of the disturbance suppression command value.

However, as described above, an individual variation occurs in the amplitude and the phase related to the torque pulsation. Therefore, the effect of suppressing the torque pulsation according to the difference from the assumed amplitude and phase is reduced. In a case where the phase is largely deviated, the torque pulsation may increase. Similarly, for the disturbance current command value, the effect of suppressing the influence of the disturbance is reduced depending on the difference from the assumed amplitude and phase. Hereinafter, a case where the torque pulsation is suppressed by the cancellation voltage command value will be described as an example, but the same concept can also be applied to a case where the influence of the disturbance is suppressed.

As a countermeasure against this, in the present embodiment, a generation device 200 is provided. The generation device 200 calculates a correction voltage or a correction current according to the characteristics of the motor 1. The correction voltage is, for example, the cancellation voltage command value vq_cancel, and is a command value for suppressing the torque pulsation of the motor 1. The correction current is, for example, the torque pulsation suppression command value i_cancel, and is a command value for suppressing the torque pulsation. The generation device 200 rewrites a table based on the calculated correction voltage or correction current. The table here is, for example, the torque amplitude table 210Tbl and the torque phase table 211Tbl, and includes an amplitude and an initial phase of a sine wave having a sixth-order frequency component in terms of electrical angle for suppressing the torque pulsation.

A generation method for the generation device 200 to generate the correction voltage or the correction current includes the following steps.

(step 1) Rotation step of rotating the rotor of the motor 1
(step 2) Measurement step of measuring torque pulsation having an Nth-order frequency component in terms of electrical angle
(step 3) Calculation step of calculating a correction voltage or a correction current for each current condition
(step 4) Rewrite step of rewriting numerical values in the table

The generation device 200 rotates the rotor of the motor 1 in Step 1 and measures the torque pulsation having the Nth-order frequency component in terms of electrical angle in Step 2. In Step 3, the generation device 200 calculates a correction voltage or a correction current for each current condition based on a measurement result of Step 2. In Step 4, the numerical values in the table are rewritten based on a calculation result of the step 3.

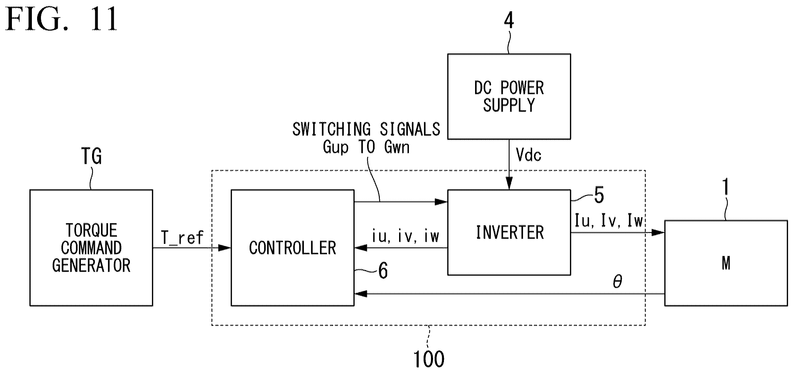

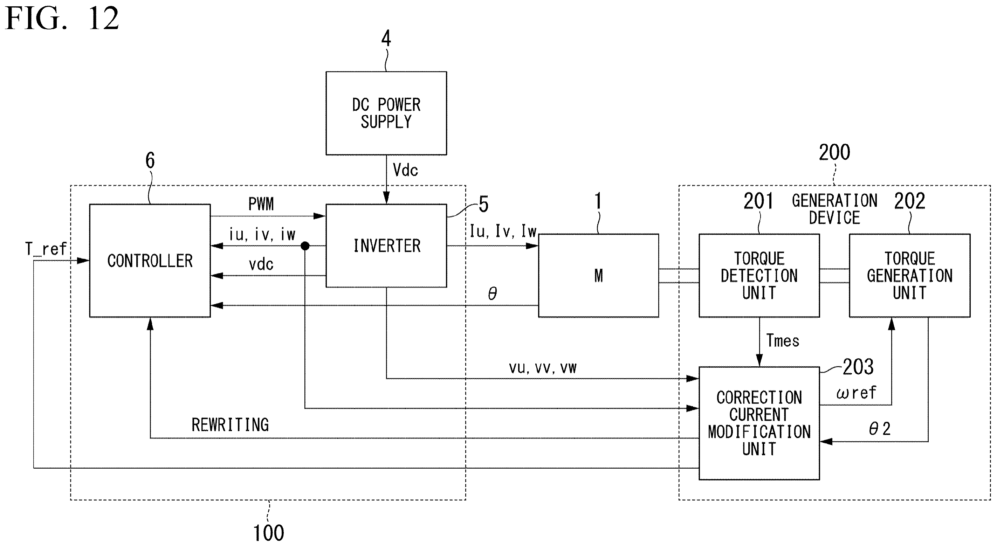

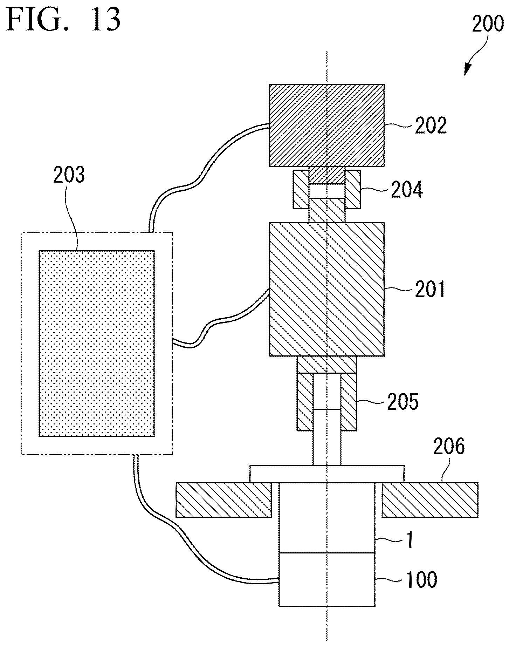

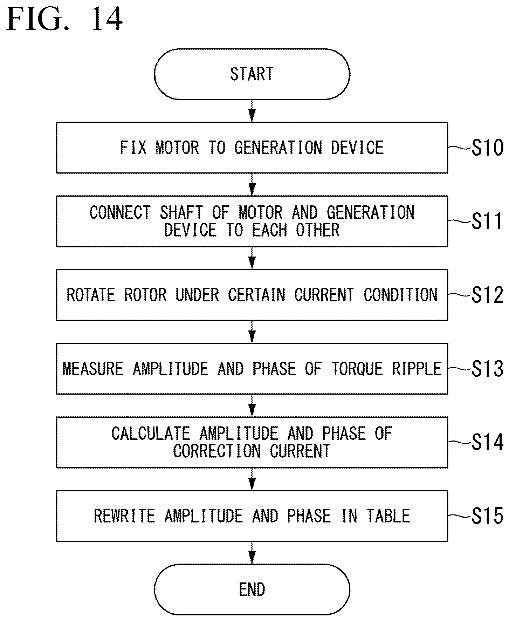

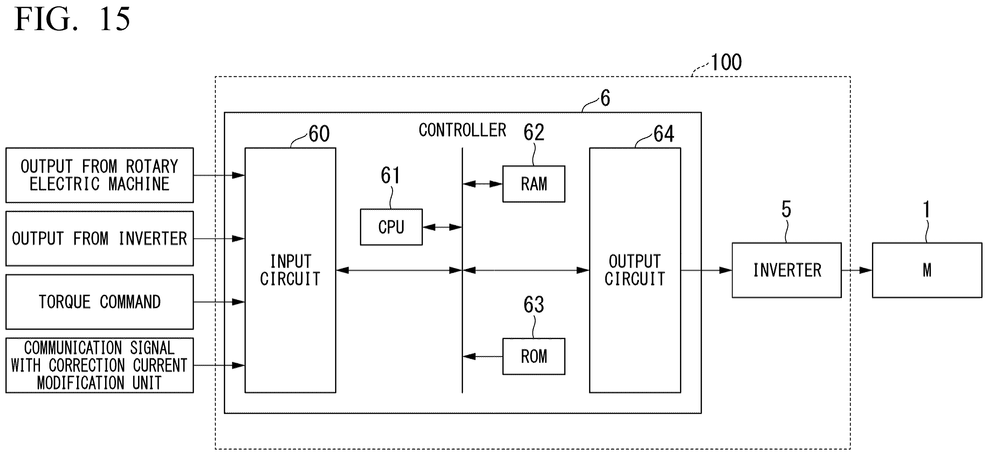

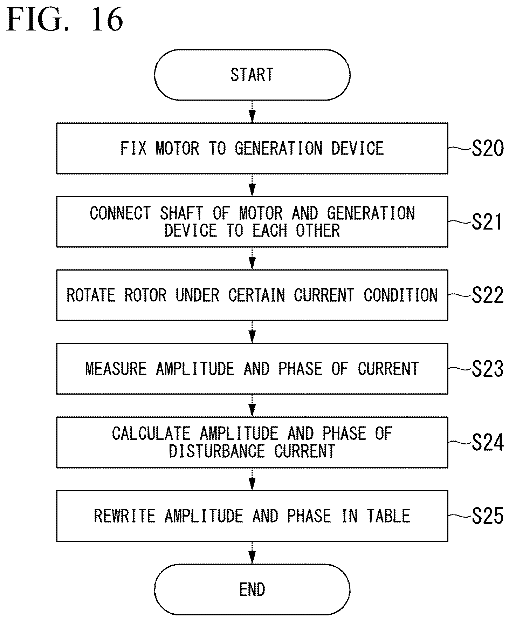

Here, the generation device 200 will be described with reference to FIGS. 11 to 16. FIG. 11 is a schematic diagram in which the configuration of the motor and the motor control device according to Embodiment 1 is simplified. FIG. 12 is a block diagram showing the configuration of the generation device according to Embodiment 1. FIG. 13 is a diagram for describing the generation device according to Embodiment 1. FIG. 14 is a flowchart showing a flow of processing performed by the generation device according to Embodiment 1. FIG. 15 is a diagram showing input and output of the motor control device according to Embodiment 1. FIG. 16 is a flowchart showing a flow of processing performed by the generation device according to Embodiment 1.

As shown in FIG. 11, the motor control device 100 applies the motor currents Iu, Iv, and Iw to the motor 1 via the inverter 5. In the motor control device 100, a current value to be applied to the motor is determined based on information such as the torque command T_ref input from a torque command generator TG, the motor currents iu, iv, and iw determined by the inverter 5, and the rotor position θ in the motor 1, and the switching signals Gup to Gwn are generated to apply the current from the inverter 5 to the motor 1, thereby generating the torque.

As shown in FIG. 12, the generation device 200 includes a torque determination unit 201, a torque generation unit 202, and a correction current modification unit 203. The torque generation unit 202 generates torque under the control of the correction current modification unit 203. The torque determination unit 201 determines the torque generated by the torque generation unit 202.

FIG. 13 schematically shows a state where the motor 1 and the generation device 200 are connected to each other. As shown in FIG. 13, the torque determination unit 201 is mechanically connected to the torque generation unit 202 via connection means 204 such as a coupling. In addition, the torque determination unit 201 is mechanically connected to the motor 1 via connection means 205 such as a coupling. The motor 1 is fixed by a motor fixing unit 206 and is electrically connected to the motor control device 100. The correction current modification unit 203 is electrically connected to the torque generation unit 202, the torque determination unit 201, and the motor control device 100.

The correction current modification unit 203 outputs control information ωref for causing the torque generation unit 202 to generate a torque, thereby causing the torque generation unit 202 to generate a torque, and acquires a rotor position θ2 of the motor 1. The correction current modification unit 203 acquires a torque Tmes determined by the torque determination unit 201.

The correction current modification unit 203 outputs the torque command T_ref to the controller 6 of the motor control device 100, thereby causing the motor control device 100 to execute the control of the motor 1, and acquires the control information used for the control of the motor 1 from the motor control device 100. The control information of the motor control device 100 is the motor voltages vu, vv, and vw and the motor currents iu, iv, and iw determined by the inverter 5.

The correction current modification unit 203 calculates the correction voltage or the correction current based on the torque Tmes, the rotor position θ2, and the control information of the motor control device 100 that controls the motor 1 at the torque generation. The correction current modification unit 203 rewrites the torque amplitude table 210Tbl and the torque phase table 211Tbl based on the calculated correction voltage or correction current.

FIG. 14 shows a flow of processing of updating the table for suppressing the torque pulsation by the generation device 200. The table for suppressing the torque pulsation includes the torque amplitude table 210Tbl and the torque phase table 211Tbl. As shown in FIG. 14, first, the motor 1 is fixed to the generation device 200 by the motor fixing unit 206 (step S10). Next, the motor 1 and the generation device 200 are connected to each other via the connection means 204 and and the connection means 205 (step S11). Next, the correction current modification unit 203 rotates the rotor under a certain current condition (step S12). The correction current modification unit 203 notifies the motor control device 100 of the torque command, and drives the motor 1 under a certain current condition, for example, under a condition of Id = Id1 and Iq = Iq1. In addition, the correction current modification unit 203 notifies the torque generation unit 202 of a constant speed command value ωref and generates a torque at a constant speed. Here, it is desirable that the speed command value ωref is low because it is desirable that the speed command value ωref is not affected by the impedance distortion. Next, the torque determination unit 201 measures a torque ripple and measures an amplitude and a phase in a sine wave that indicates a torque pulsation waveform (step S13). The torque determination unit 201 calculates, for example, the amplitude and the phase at a desired frequency by performing frequency analysis on the measured waveform. The correction current modification unit 203 calculates the amplitude and the phase of the correction current based on a measurement result (step S14). The correction current modification unit 203 rewrites the amplitude in the torque amplitude table 210Tbl and the phase in the torque phase table 211Tbl as a table based on the calculated correction current (step S15).

Instead of performing the measurement for all the current conditions in the torque amplitude table 210Tbl, the measurement may be performed only for a specific current condition extracted from the torque amplitude table 210Tbl, and linear interpolation may be performed using the measurement result to calculate the amplitude and the phase estimated under other current conditions. By performing the linear interpolation, it is possible to reduce the number of the current conditions for which measurements are actually performed, making it possible to improve the productivity.

The measurement result may be compared with a preset numerical value to calculate the amplitude under a current condition for which no measurement is performed. For example, the size of the motor 1 in a rotation axis direction varies within a tolerance allowed for the product. In this case, it is considered that in a case where the size in the rotation axis direction increases by 1%, the magnetic flux linking a coil increases, so that the torque also increases by approximately 1%. In addition, the torque ripple also increases in proportion to the size in the rotation axis direction. Based on such a concept, for example, a reference value of the amplitude of a torque pulsation waveform under the current condition (Id1, Iq1) is defined as i_ca_amp_ref (Id1, Iq1). Then, a measured value of the amplitude according to the characteristics of the individual product under the current condition (Id1, Iq1) is denoted by i_ca_amp_mes (Id1, Iq1). As in the following equation (1-28), a coefficient α_ca_amp for calculating the amplitude under a current condition for which no measurement is performed can be calculated.

$$\alpha\_ca\_amp = i\_ca\_amp\_mes \, (Id1, \, Iq1)$$

$$/i\_ca\_amp\_ref \, (Id1, \, Iq1) \, ... \, Equation \, (1\text{-}28)$$

By multiplying the amplitude value in the torque amplitude table 210Tbl by the coefficient $\alpha$_ca_amp calculated by Equation (1-28), it is possible to calculate an amplitude value under other current conditions for which no measurement is performed. As a result, it is possible to reduce the number of the current conditions for which measurements are actually performed, and it is possible to expect an effect of shortening the manufacturing lead time and improving the productivity. In addition, the reference value i_ca_amp_ref (Id, Iq) of the amplitude can be obtained by electromagnetic field analysis or the like. Alternatively, the reference value can be set by performing measurement using samples extracted from a product group and obtaining an average value of measurement results of a plurality of samples. In addition, in a case where the reference value can be mathematically defined, the reference value may be set using a mathematical expression.

The same method can be applied to the phase. That is, the phase under the current condition for which no measurement is performed may be calculated by being compared with a preset numerical value. For example, when the rotation position determination unit 2 is assembled to the motor 1, it is assumed that the phase deviates within a tolerance allowed for the product. In this case, the rotation position (angle) determined in a case where the motor 1 is driven and the phase of the torque ripple are basically uniformly deviated from each other. Based on such a concept, for example, a reference value of the phase under the current condition (Id1, Iq1) is defined as i_ca_ph_ref (Id1, Iq1). Then, a measured value of the phase according to the characteristics of the individual product under the current condition (Id1, Iq1) is denoted by i_ca_ph_mes (Id1, Iq1). As in the following equation (1-29), a phase difference $\beta$Idi_ca_ph for calculating the phase under a current condition for which no measurement is performed can be calculated.

$$\beta\_Idi\_ca\_ph = i\_ca\_ph\_mes \, (Id1, \, Iq1)$$

$$-i\_ca\_ph\_ref \, (Id1, \, Iq1) \, ... \, Equation \, (1-29)$$

By adding the phase difference $\beta$Idi_ca_ph calculated by Equation (1-29) to the phase in the torque phase table 211Tbl, it is possible to calculate a phase under other current conditions for which no measurement is performed. As a result, it is possible to reduce the number of the current conditions for which measurements are actually performed, and it is possible to expect an effect of shortening the manufacturing lead time and improving the productivity. In addition, the reference value i_ca_ph_ref (Id, Iq) of the phase can be obtained by electromagnetic field analysis or the like. Alternatively, the reference value can be set by performing measurement using samples extracted from a product group and obtaining an average value of measurement results of a plurality of samples. In addition, in a case where the reference value can be mathematically defined, the reference value may be set using a mathematical expression.

In the flowchart shown in FIG. 14. a case where writing is performed each time measurement is performed and measurement and writing are repeated is illustrated. The present invention is not limited to this. Measurements based on a plurality of current conditions may be made, and after the plurality of measurements have been completed, the amplitude and the phase calculated based on each of the plurality of measurements may be written into the table. For example, after repeating steps S12 and S13 shown in FIG. 14 while changing the current conditions, steps S14 and S15 may be executed. For example, in a case of performing measurement in which a motor of a four-pole pair is rotated at 600 rpm, the measurement can be performed in which a mechanical angle is 0.1 seconds per one round and an electrical angle is 0.025 seconds per one round. Even in a case where the measurement is performed under each of 100 kinds of current conditions, a measurement time is 2.5 seconds. After all the measurements are completed, the calculation based on each measurement is executed, and the amplitudes based on the calculation results are collectively reflected in the torque amplitude table 210Tbl. By performing the writing once for the plurality of measurements, it is possible to expect an effect of shortening the manufacturing lead time and improving the productivity as compared with a case where the writing is performed for each measurement. In the above example, the correction current is defined as a table of the amplitude and the phase, that is, a function of the rotation angle in a sine wave, but the present invention is not limited to this. For example, the correction current may be defined by using a table in which the rotation angle and the current value corresponding to the rotation angle are associated with each other. The same effect can be obtained in this case as well.

FIG. 15 schematically shows a hardware configuration of the controller 6. As shown in FIG. 15, the controller 6 includes an input circuit 60, a CPU 61, a ROM 62, a ROM 63, and an output circuit 64 as a hardware configuration. In the controller 6, these hardware configurations are connected via a bus. Various sensors, switches, command values, communication signals with the correction current modification unit 203, and the like are connected to the input circuit 60. The input circuit 60 includes an A/D converter or the like that converts output signals of the sensors, the switches, and the like into digital signals and that inputs the digital signals to the CPU 61. An electrical load such as a gate drive circuit that drives the switching element in the inverter 5 to be turned on and off is connected to the output circuit 64. The output circuit 64 includes a drive circuit or the like that outputs a control signal generated by the CPU 61 to the electrical load. The CPU 61 is an arithmetic processing device. The RAM 62 is a storage medium configured to read and write data from and to the CPU 61. The ROM 63 is a storage medium configured to read out data from the CPU 61. Then, a program for implementing the functions of the controller 6 is stored in the ROM 63. The CPU 61 executes software (program) and cooperates with the RAM 62, the input circuit 60, the output circuit 64, and other hardware included in the motor control device 100 to implement the functions of the controller 6. Various types of information used to implement the functions of the controller 6, for example, various data such as the inductance setting data, the resistance value R of the winding, the order N, the inductance L, the torque amplitude table 210Tbl, the torque phase table 211Tbl, the disturbance suppression amplitude table 220Tbl, and the disturbance suppression phase table 221Tbl are stored in the ROM 63 or the like and are used when software (program) is executed. In addition, table data such as the torque amplitude table 210Tbl, the torque phase table 211Tbl, the disturbance suppression amplitude table 220Tbl, and the disturbance suppression phase table 221Tbl is stored in the RAM 62 or the like and is used when software (program) is executed.

As shown in FIG. 12, the correction current modification unit 203 writes the amplitude and the phase calculated using the measurement result and the like into the RAM 62. As a result, tables such as the torque amplitude table 210Tbl, the torque phase table 211Tbl, the disturbance suppression amplitude table 220Tbl, and the disturbance suppression phase table 221Tbl are updated, and tables corresponding to the characteristics of the motor 1 are generated. Thereafter, when the motor control device 100 controls the motor 1, the table data stored in the RAM 62 is referred to by the cancellation calculator 20, and the motor 1 is driven by the control logic of adding the cancellation voltage command value to the fundamental wave command value as shown in FIG. 1. As a result, the torque ripple can be suppressed.

As described above, in the present disclosure, the numerical values such as the amplitude and the phase stored in the table can be rewritten by using the calculation result calculated by the correction current modification unit 203 based on the actual measurement result. As a result, it is possible to calculate the cancellation voltage command value according to the characteristics of the motor 1. Therefore, it is possible to correct the variation in the characteristics of the product, and it is possible to accurately suppress the torque ripple. This eliminates the need to control variations in components more than necessary, which has the effect of improving the productivity. In addition, in the present disclosure, the generation device 200 is provided as a device different from the motor control device 100, the correction current modification unit 203 of the generation device 200 performs calculation, and the table data of the RAM 62 in the motor control device 100 is rewritten. Therefore, the motor 1, which is a product, or the CPU 61 of the motor control device 100 does not need to execute the calculation of the correction current or the like according to the characteristics of the motor 1. Therefore, a processing load of the motor control device 100 can be reduced, and heat generation in the motor control device 100 can be suppressed, which has an effect of reducing the size or cost of the motor 1.

In a case where the motor 1 or the motor control device 100 is a product including a function unit (hereinafter, referred to as a built-in torque determination unit) that determines a torque, the torque determination unit 201 may be omitted in the generation device 200. In that case, the generation device 200 acquires the measured value determined by the built-in torque determination unit, and calculates the amplitude and the phase related to the correction current using the acquired measured value. As a result, the same effect can be obtained. In addition, the correction current modification unit 203 may calculate the correction current or the like by using both the torque measurement value determined by the built-in torque determination unit and the torque measurement value determined by the torque determination unit 201 of the generation device 200. In this case, for example, the correction current modification unit 203 compares both the measurement values to acquire the difference therebetween as a coefficient, and changes numerical values such as a determination parameter in the built-in torque determination unit. In general, a sensor built in a product is required to be inexpensive. Therefore, it is not always possible to adopt a built-in torque determination unit that has excellent resolution and responsiveness, and a built-in torque determination unit having a large individual variation may be included. In a case where such a built-in torque determination unit is to be calibrated one by one, the productivity deteriorates and the cost increases. On the other hand, even in a case where a sensor having high resolution and responsiveness is selected as the torque generation unit 202 provided in the generation device 200 different from the motor 1 or the motor control device 100, the cost per product can be kept small. In addition, it is also possible to perform periodic calibration. Therefore, in many cases, the sensor provided in the torque determination unit 201 has higher accuracy than the built-in torque determination unit. By changing the numerical values such as the determination parameter in the built-in torque determination unit based on the torque measurement value measured by the correction current modification unit 203, the built-in torque determination unit can be calibrated at low cost.

A period for executing the calculation in the generation device 200 may be set to be shorter than that in the motor control device 100. By reducing the period of the calculation measured by the generation device 200, the amplitude and the phase can be measured more accurately. Therefore, it is possible to improve the estimation accuracy of the torque ripple of the product. Since it is not necessary to change the period of the calculation performed by the motor control device 100, the motor control device 100 can be used as it is.

In addition, after the correction current modification unit 203 rewrites the table, the measurement using the rewritten table may be executed again. By executing the measurement again, the accuracy of the information stored in the table can be improved, and this has an effect of suppressing the release of defective products onto the market due to a bug in calculation or the like.

FIG. 16 shows a flow of processing of updating the table for suppressing the influence of the disturbance by the generation device 200. The tables for suppressing the influence of the disturbance are the disturbance suppression amplitude table 220Tbl and the disturbance suppression phase table 221Tbl. As shown in FIG. 16, first, the motor 1 is fixed to the generation device 200 by the motor fixing unit 206 (step S20). Next, the motor 1 and the generation device 200 are connected to each other via the connection means 204 and the connection means 205 (step S21). Next, the correction current modification unit 203 rotates the rotor under a certain current condition (step S22). The correction current modification unit 203 notifies the motor control device 100 of the torque command, and drives the motor 1 under a certain current condition, for example, under a condition of Id = Id1 and Iq = Iq1. In addition, the correction current modification unit 203 notifies the torque generation unit 202 of a constant speed command value ωref and generates a torque at a constant speed. It is desirable that the speed command value ωref here is in a high speed range where the current pulsation due to the disturbance increases. By performing the measurement in the high speed range where the current fluctuation due to the disturbance increases, there is an effect of improving the measurement accuracy for suppressing the influence of the disturbance. Note that this is not an essential requirement in the present disclosure, and, in a case where the productivity is prioritized, the current pulsation caused by the disturbance may be measured when measuring the torque ripple. The torque determination unit 201 measures the current pulsation due to the disturbance and measures an amplitude and a phase in a sine wave that indicates a current pulsation waveform due to the disturbance (step S23). The torque determination unit 201 calculates, for example, the amplitude and the phase at a desired frequency by performing frequency analysis on the measured waveform. The correction current modification unit 203 calculates the amplitude and the phase of the correction current based on a measurement result (step S24). The correction current modification unit 203 rewrites the amplitude in the disturbance suppression amplitude table 220Tbl and the phase in the disturbance suppression phase table 221Tbl as a table based on the calculated correction current (step S25).

As described above, the correction current modification unit 203 may calculate the amplitude and the phase under a current condition for which no measurement is performed by using Equation (1-28) and Equation (1-29) by comparing the amplitude and the phase with a preset numerical value.

In addition, in the above description, a case where the torque is measured is exemplified as a measurement object, but the present invention is not limited to this. As the measurement object, it is sufficient that at least a torque ripple can be measured, and it is sufficient to be a physical quantity correlated with the torque ripple. As the physical quantity correlated with the torque ripple, for example, inductance, induced voltage, vibration, and sound can be used. Such any physical quantity correlated with the torque ripple may be used as the measurement object.

In addition, the configuration of the motor control device 100 in FIG. 1 is an example of an embodiment of the present disclosure, and is not limited to this. For example, the cancellation calculator 20 does not need to include both the torque suppression command value calculator 21 and the disturbance suppression command value calculator 22. The motor control device 100 may have the configuration in which only the torque suppression command value calculator 21 is provided, or may have the configuration in which only the disturbance suppression command value calculator 22 is provided. In addition, the configuration in which the torque pulsation suppression command value i_cancel is added to the voltage (fundamental wave command value) may be adopted.

[Embodiment 2]

Here, Embodiment 2 will be described. The present embodiment is different from Embodiment 1 in that the generation device 200 measures an induced voltage and a cogging torque.

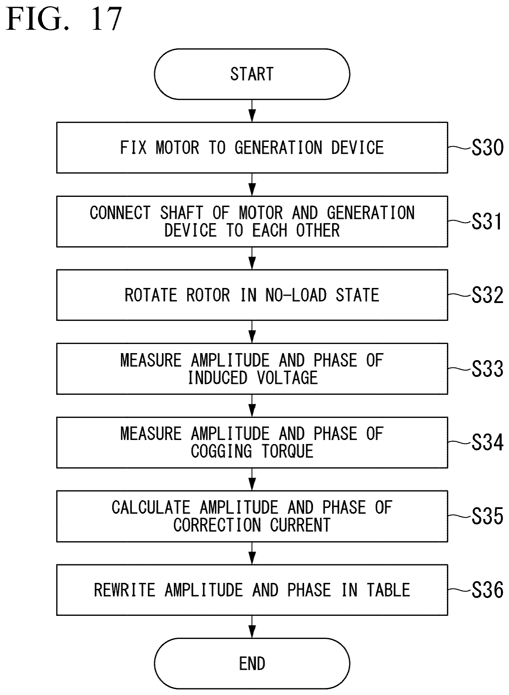

FIG. 17 is a flowchart showing a flow of processing performed by the generation device according to Embodiment 2. FIG. 17 shows a flow of processing of updating the table for suppressing the torque pulsation by the generation device 200. As shown in FIG. 17, first, the motor 1 is fixed to the generation device 200 by the motor fixing unit 206 (step S30). Next, the motor 1 and the generation device 200 are connected to each other via the connection means 204 and the connection means 205 (step S31). Next, the correction current modification unit 203 rotates the rotor in a no-load state, that is, in a state where there is no load (step S32). The torque determination unit 201 measures the pulsation of the induced voltage and measures an amplitude and a phase in a sine wave that indicates a pulsation waveform of the induced voltage (step S33). The correction current modification unit 203 calculates the amplitude and the phase of the cogging torque based on a measurement result (step S34). The correction current modification unit 203 calculates the amplitude and the phase of the correction current based on the amplitude and the phase of the cogging torque (step S35). The correction current modification unit 203 rewrites the amplitude in the torque amplitude table 210Tbl and the phase in the torque phase table 211Tbl as a table (step S36).

Here, a torque equation is shown in Equation (2-1). T is a torque. Pm is a constant. Φ is the magnetic flux of the motor 1. Ld is the d-axis inductance. Lq is the q-axis inductance. Id is a d-axis motor current. Iq is a q-axis motor current.

$$T = Pm \cdot \Phi \cdot Iq + Pm \cdot (Ld - Lq) \cdot Id \cdot Iq \ ... \ \text{Equation (2-1)}$$

As shown in Equation (2-1), excluding the current value, the torque T is generated by the magnetic flux Φ and the difference between the d-axis inductance Ld and the q-axis inductance Lq. The magnetic flux $\Phi$ can be calculated from the induced voltage, and the difference between the d-axis inductance Ld and the q-axis inductance Lq appears as the cogging torque. Therefore, by measuring these two, the characteristics of the motor 1 in a state where the current is not applied can be obtained.

In a case where the torque ripple is obtained mathematically by using Equation (2-1), it is difficult to accurately predict the torque ripple in a case where the estimated values of the magnetic flux $\Phi$ and the difference between the d-axis inductance Ld and the q-axis inductance Lq are different from the measured values. In this case, the effect of suppressing the torque ripple due to the correction current for suppressing the torque ripple is reduced. In addition, since Equation (2-1) is used when calculating the current command value from the torque command, even in a case where the calculated current value is input, this can cause the output torque to deviate.

In such a measurement method, although a state where a current is applied cannot be directly measured, it is possible to suppress the variation when a current is applied by correcting the error in the estimated value at least in the no-load condition.

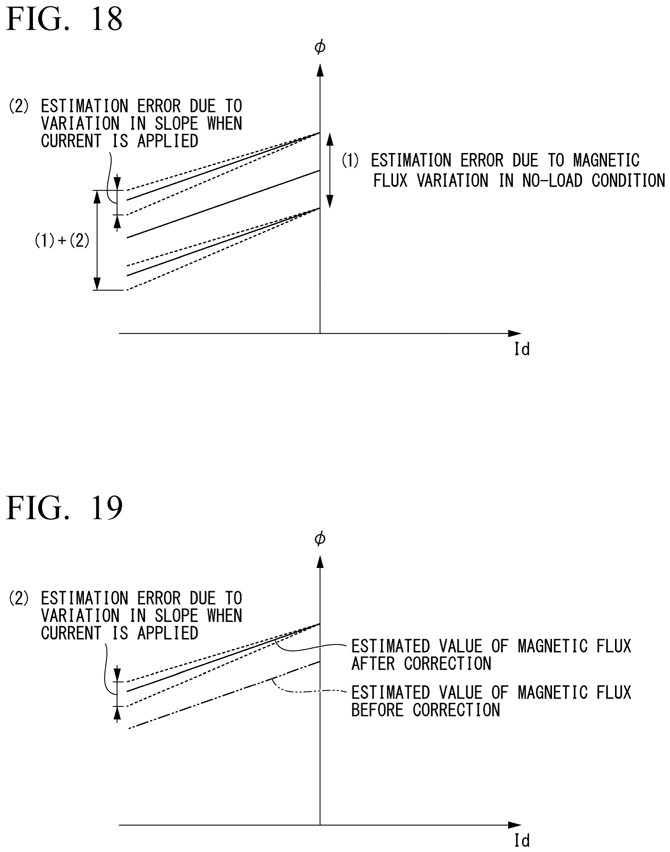

The logic will be described with reference to FIGS. 18 to 21. FIGS. 18 to 22 are diagrams for describing processing performed by the generation device according to Embodiment 2. FIG. 18 schematically shows a relationship between the d-axis motor current Id and the magnetic flux $\Phi$. In a case where attention is paid to Id = 0, (1) "estimation error due to magnetic flux variation in no-load condition" occurs. This variation is caused by, for example, a variation in an average value of an air gap between the rotor and the stator or a variation in a magnetization force of a magnet. Next, in control called a field-weakening current, in a case where a negative current value is applied to the d-axis motor current Id, the magnetic flux $\Phi$ decreases. Even in the slope of this decrease, variations occur. The variations in the slope result in (2) "estimation error due to variation in slope when current is applied". For example, the variations in the slope are caused by variations in the characteristics of a B-H curve of the magnet, which is a factor in generating the estimation error. The estimation error in a case where the field-weakening current is applied is (1) + (2).

FIG. 19 schematically shows a relationship between the d-axis motor current Id in which the magnetic flux $\Phi$ in the no-load state is corrected based on the measured value and the magnetic flux $\Phi$. By the correction, the "estimation error due to magnetic flux variation in no-load condition" of (1) can be canceled. As a result, the estimation error in a case where the current is applied is only (2). Therefore, it is possible to reduce the estimation error even when the current is applied.

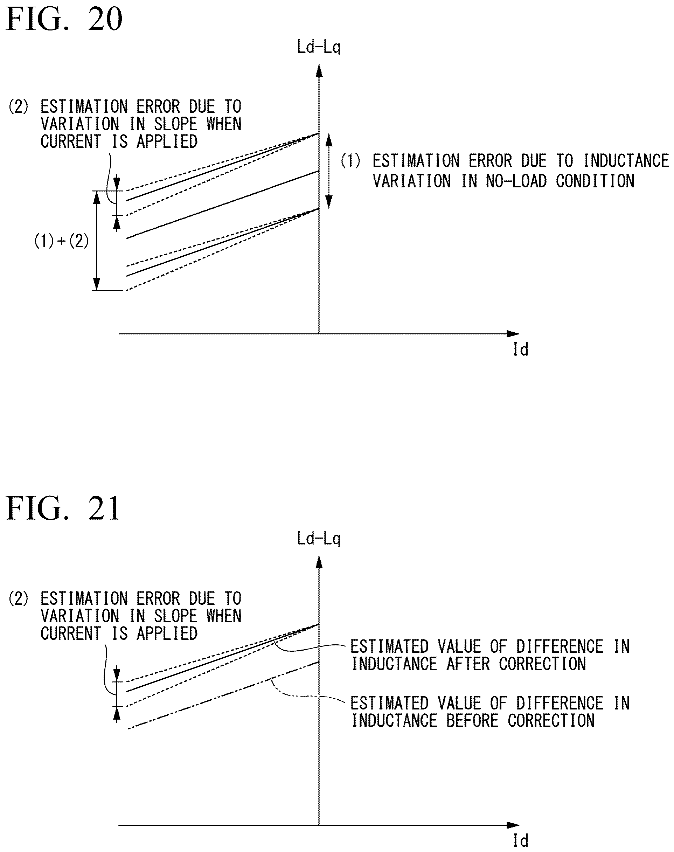

FIG. 20 schematically shows the d-axis motor current Id and the difference Ld - Lq between the d-axis inductance Ld and the q-axis inductance Lq. In a case where attention is paid to Id = 0, (1) "estimation error due to inductance variation in no-load condition" occurs. This variation is caused by a variation in magnetic permeability of the electromagnetic steel sheet used in the stator or a variation in deterioration of magnetic permeability due to stress applied to the electromagnetic steel sheet by shrink fitting or the like. Next, in control called a field-weakening current, in a case where a negative current value is applied to the d-axis motor current Id, the difference Ld - Lq in the inductance changes. Unlike the magnetic flux $\Phi$, the difference does not necessarily decrease uniformly, but a case where the difference uniformly decreases will be described as an example. Even in the slope of this decrease, variations occur. The variations in the slope result in (2) "estimation error due to variation in slope when current is applied". For example, the variations in the slope are caused by variations in the saturation magnetic flux density of the electromagnetic steel sheet in the stator, which is a factor in generating the estimation error. The estimation error in a case where the field-weakening current is applied is (1) + (2).

FIG. 21 schematically shows a relationship between the d-axis motor current Id in which the difference Ld - Lq in the inductance in the no-load state is corrected based on the measured value and the difference Ld - Lq in the inductance. By the correction, the "estimation error due to inductance variation in no-load condition" of (1) can be canceled. As a result, the estimation error in a case where the current is applied is only (2). Therefore, it is possible to reduce the estimation error even when the current is applied.

[Embodiment 3]

Here, Embodiment 3 will be described. The present embodiment is different from Embodiment 1 and Embodiment 2 in that the generation device 200 measures the physical quantity correlated with the torque ripple. Examples of the physical quantity correlated with the torque ripple include inductance, induced voltage, vibration, and sound. For example, taking vibration as an example, basically, the larger the torque ripple, the larger the vibration. Therefore. the magnitude of the torque ripple can be indirectly estimated by comparing a reference value of the vibration acceleration prepared in advance with a measured value of the vibration. Hereinafter, a case where vibration is used as the physical quantity correlated with the torque ripple will be described as an example.

For example, the reference value of the vibration acceleration in the motor 1 is denoted by a reference value a_ref, and the measured value of the vibration acceleration in the individual motor 1 is denoted by a_mes. A coefficient $\gamma$_a can be calculated as in the following equation (3-1).

$$\gamma\_a = a\_mes/a\_ref \ldots \text{Equation (3-1)}$$

For example, a reference amplitude value is stored in the torque amplitude table 210Tbl. The coefficient $\gamma\_a$ calculated based on the vibration acceleration value measured in the motor 1 is uniformly multiplied by the reference amplitude value. For example, in a case where the vibration acceleration is 1.1 times the reference value, the coefficient $\gamma\_a$ = 1.1. In this case, the acceleration in the torque amplitude table 210Tbl is uniformly multiplied by 1.1. The reference value of the vibration acceleration can be set, for example, based on the vibration acceleration in a specific individual extracted from a certain product. For the individual, the amplitude value in the torque amplitude table 210Tbl is obtained and used as the reference amplitude value. Then, the coefficient $\gamma\_a$ according to Equation (3-1) is obtained in each motor 1. A table obtained by uniformly multiplying the torque amplitude table 210Tbl for the specific individual by the coefficient $\gamma\_a$ in each motor 1 is generated as the torque amplitude table 210Tbl in which the characteristics of the motor 1 are reflected.

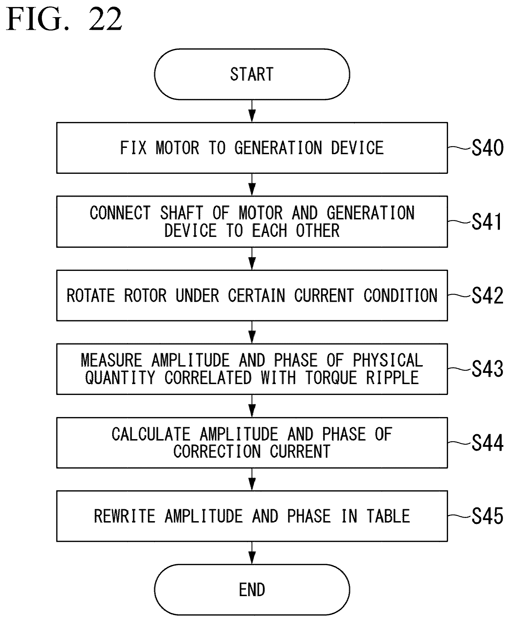

FIG. 22 is a flowchart showing a flow of processing performed by the generation device according to Embodiment 3. FIG. 22 shows a flow of processing of updating the table for suppressing the torque pulsation by measuring the physical quantity correlated with the torque ripple by the generation device 200. As shown in FIG. 22, first, the motor 1 is fixed to the generation device 200 by the motor fixing unit 206 (step S40). Next, the motor 1 and the generation device 200 are connected to each other via the connection means 204 and the connection means 205 (step S41). Next, the correction current modification unit 203 rotates the rotor under a certain current condition (step S42). A physical quantity determination unit (not shown) measures the pulsation of the physical quantity correlated with the torque ripple, and measures an amplitude and a phase in a sine wave indicating the pulsation waveform (step S43). Any measuring device including a microphone, an acceleration sensor, or the like can be applied as the physical quantity determination unit. The correction current modification unit 203 calculates the amplitude and the phase of the correction current based on a measurement result (step S44). The correction current modification unit 203 rewrites the amplitude in the torque amplitude table 210Tbl and the phase in the torque phase table 211Tbl as a table by using the amplitude and the phase of the correction current (step S45).

As described above, in a case where the vibration is measured, the torque amplitude table 210Tbl can be generated without measuring the torque ripple according to the characteristics of the motor 1. Therefore, it is not necessary to provide the torque determination unit 201 in the generation device 200. In addition, in a case where the vibration occurring when the rotation of the motor 1 is accelerated or decelerated is measured, it is not necessary to physically connect the torque generation unit 202 and the motor 1. Therefore, there is an effect of shortening the manufacturing lead time and improving the productivity.

[Embodiment 4]

Here, Embodiment 4 will be described. The present embodiment is different from Embodiment 1 to Embodiment 3 in that the generation device 200 measures the torque ripple or the physical quantity correlated with the torque ripple under a measurement condition in which the rotor temperature is set to any temperature different from the room temperature.

It is known that the magnetic flux amount of the permanent magnet changes depending on the temperature. When the magnetic flux amount changes, the influence of magnetic saturation or the like changes, so that the amplitude and the phase of the torque ripple change even under the same current condition. Since the motor 1 generates heat due to loss, the motor 1 is operated under an operating condition in which the rotor temperature is higher than the room temperature on average. Therefore, it is desirable that the measurement and rewriting steps of the generation device 200 are executed under an average operating condition. On the other hand, in a factory that manufactures a product, in order to allow an operator to work comfortably or to stably operate various manufacturing devices, the temperature is generally controlled at about 20°C to 25°C in many cases. Therefore, in a factory that manufactures a product, in a case where the measurement and rewriting steps of the generation device 200 are executed, the amplitude and phase of the torque ripple different from a condition under which the motor 1 is normally driven may be measured.

Therefore, in Embodiment 4, the torque ripple or the physical quantity correlated with the torque ripple is measured under a measurement condition in which the rotor temperature is set to any temperature different from the room temperature.

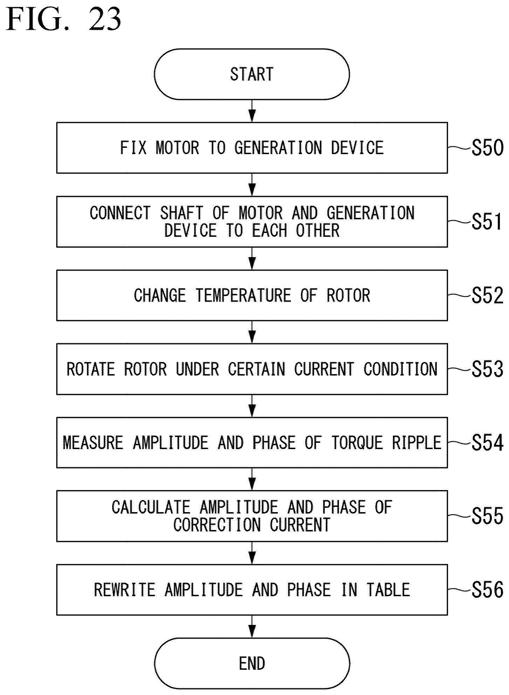

FIG. 23 is a flowchart showing a flow of processing performed by the generation device according to Embodiment 4. FIG. 23 shows a flow of processing of performing measurement with the rotor temperature set to a temperature different from the room temperature. As shown in FIG. 23, first, the motor 1 is fixed to the generation device 200 by the motor fixing unit 206 (step S50). Next, the motor 1 and the generation device 200 are connected to each other via the connection means 204 and the connection means 205 (step S51). Next, a temperature control unit (not shown) changes the rotor temperature (step S52). As described above, in many cases, since the motor 1 is driven at the temperature higher than the room temperature, an example in which the rotor temperature is increased will be described, but the temperature may be lowered in a case of assuming use in a cold area or the like. As a method for the temperature control unit to change the rotor temperature, there is a method of blowing hot air from the outside. Any other method can be used, such as a method of directly applying a current to the motor 1 to raise the temperature via heat from a coil, or a method of applying an AC magnetic field to the rotor to raise the temperature. In a case where temperature determination means such as a radiation thermometer determines that the target temperature has been reached, the correction current modification unit 203 rotates the rotor under a certain current condition (step S53). The correction current modification unit 203 measures the torque ripple or the pulsation of the physical quantity correlated with the torque ripple, and measures an amplitude and a phase in a sine wave indicating the pulsation waveform (step S54). The correction current modification unit 203 calculates the amplitude and the phase of the correction current based on a measurement result (step S55). The correction current modification unit 203 rewrites the amplitude in the torque amplitude table 210Tbl and the phase in the torque phase table 211Tbl as a table by using the amplitude and the phase of the correction current (step S56).

As a result, the torque ripple can be measured in an environment close to an average environment in which the motor 1 is used, and numerical values such as the amplitude and the phase in the table can be rewritten based on the measurement result. As a result, the influence of the temperature change can be practically reduced, and there is an effect of reducing the torque ripple. It is not always necessary to use a sensor as the temperature determination means. For example, means for indirectly estimating the temperature, such as a rate of change in the induced voltage, may be used. In addition, a method of acquiring a relationship between the heating time and the rotor temperature offline and estimating the rotor temperature based on the heating time may be adopted.

In the above description, a method of reducing the torque ripple under a condition corresponding to an average use environment has been described. Without being limited to this, the torque amplitude table 210Tbl, the torque phase table 211Tbl, the disturbance suppression amplitude table 220Tbl, and the disturbance suppression phase table 221Tbl may be generated for each temperature condition. For example, taking the torque amplitude table 210Tbl as an example, the torque amplitude table 210Tbl in which the amplitude value at 20°C is stored is generated, and the torque amplitude table 210Tbl in which the amplitude value at 80°C is stored is generated separately from the table. The motor 1 in FIG. 1 is provided with rotor temperature determination means, which feeds back the rotor temperature and selects a table to be referred to depending on a temperature condition. For example, when the rotor temperature is 50°C or lower, the table for 20°C is referred to. On the other hand, when the temperature is higher than 50°C, the table for 80°C is referred to. As described above, by selecting the torque amplitude table 210Tbl according to the rotor temperature, the influence of the change in the torque ripple due to the rotor temperature is canceled, and the torque ripple can be reduced.

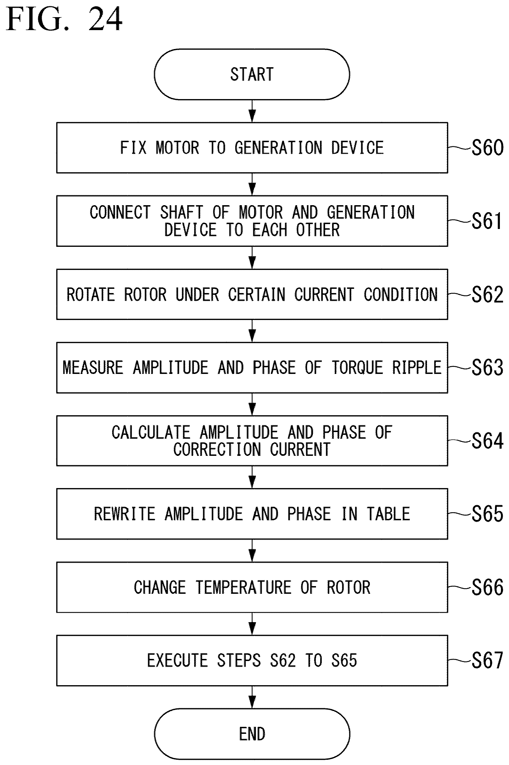

FIG. 24 is a flowchart showing a flow of processing performed by the generation device according to Embodiment 4. FIG. 24 shows a flow of processing of generating a plurality of tables according to the rotor temperature. As shown in FIG. 24, first, the motor 1 is fixed to the generation device 200 by the motor fixing unit 206 (step S60). Next, the motor 1 and the generation device 200 are connected to each other via the connection means 204 and the connection means 205 (step S61). Next, the correction current modification unit 203 rotates the rotor under a certain current condition (step S62). The correction current modification unit 203 measures the torque ripple or the pulsation of the physical quantity correlated with the torque ripple, and measures an amplitude and a phase in a sine wave indicating the pulsation waveform (step 63). The correction current modification unit 203 calculates the amplitude and the phase of the correction current based on a measurement result (step S64). The correction current modification unit 203 rewrites the amplitude in the torque amplitude table 210Tbl and the phase in the torque phase table 211Tbl as a table by using the amplitude and the phase of the correction current (step S65). Next, a temperature control unit (not shown) changes the rotor temperature (step S66). In a case where temperature determination means such as a radiation thermometer determines that the target temperature has been reached, steps S62 to S65 are executed (step S67).

In addition, the generation device 200 according to each embodiment can be used as a manufacturing device for manufacturing the motor control device 100. In this case, the manufacturing device manufactures the motor control device 100 by using the table generation method of the generation device 200. The manufacturing device can suppress the "variation in product" by manufacturing the motor control device 100 using the table generation method of the generation device 200. A method for the manufacturing device to manufacture the motor control device 100 using the table generation method of the generation device 200 is an example of a "manufacturing method".

The motor control device 100 described above includes a computer system therein. The steps of the above-mentioned processing are stored in a computer-readable recording medium in a form of a program, and the above-mentioned processing is performed by the computer reading and executing this program. Here, the computer-readable recording medium refers to a magnetic disk, a magneto-optical disk, a CD-ROM, a DVD-ROM, a semiconductor memory, and the like. Alternatively, this computer program may be distributed to a computer via a communication line, and the computer receiving the distribution may execute the program.

REFERENCE SIGNS LIST

100 Motor control device
1 Motor
2 Rotation position determination unit
3 Current determination unit
4 DC power supply
5 Inverter
6 Controller
7 Current command value calculator
8 Coordinate transformation device
9 Current controller
10 Coordinate transformation device
11 PWM signal generator
12 Speed calculator 12
20 Cancellation calculator
21 Torque suppression command value calculator
22 Disturbance suppression command value calculator
200 Generation device (motor control table generation device)
201 Torque determination unit
202 Torque generation unit
203 Correction current modification unit (correction command value modification unit)
210Tbl Torque amplitude table (correction table)
211Tbl Torque phase table (correction table)
220Tbl Disturbance suppression amplitude table (correction table)
221Tbl Disturbance suppression phase table (correction table)

**Claims**

1. A motor control table generation method for generating a correction table in which current conditions and correction indices are associated with each other in a motor control device including a correction command value calculation unit configured to calculate a correction command value for suppressing a torque ripple of a motor by using the correction table, the motor control table generation method comprising:

   rotating the motor via a torque generation unit;
   performing torque determination to measure a pulsation amount, which is a torque ripple or a physical quantity correlated with the torque ripple, via a torque determination unit, in which the torque ripple includes a frequency component equivalent to N times (N is an integer of 1 or more) a fundamental frequency corresponding to an electrical angle of the rotated motor;
   calculating, for each current condition, a modified correction index, which is a correction index for suppressing the pulsation amount measured through the torque determination, based on a measurement result of the torque determination of the torque determination unit via a correction command value modification unit; and
   writing the modified correction index into the correction table via the correction command value modification unit.

2. The motor control table generation method according to Claim 1,
   wherein the torque determination unit and the correction command value modification unit are provided in a generation device different from the motor control device.

3. The motor control table generation method according to Claim 1,

   wherein the torque determination unit is provided in both the motor control device and a generation device different from the motor control device, and
   the correction command value modification unit is configured to calculate the modified correction index based on the measurement result of measurement of each torque determination unit.

4. The motor control table generation method according to Claim 2 or 3,
   wherein the torque determination unit is configured to perform the torque determination at a period shorter than a period at which the correction command value is calculated by the correction command value calculation unit.

5. The motor control table generation method according to Claim 1,
   wherein the motor is fixed to a generation device provided with the torque determination unit before the motor is rotated by the torque generation unit.

6. The motor control table generation method according to Claim 1,

   wherein, in the correction table, at least one of an amplitude or a phase in the correction command value is indicated as the correction index, and
   the correction command value modification unit is configured to calculate an amplitude and a phase of a sine wave as the modified correction index corresponding to the current condition in the torque determination by setting a reference value for at least one of an amplitude or a phase as the modified correction index and comparing the reference value with the pulsation amount measured through the torque determination.

7. The motor control table generation method according to Claim 1,

   wherein, in the correction table, an amplitude and a phase in the correction command value are indicated as the correction index, and
   the correction command value modification unit is configured to set a combination of currents in respective axial directions of two rotating axes of the motor as the current condition and calculate, by using a matrix indicating the current condition, an amplitude and a phase as the modified correction index for each current condition.

8. The motor control table generation method according to Claim 1,

   wherein, in the correction table, an amplitude and a phase in the correction command value are indicated as the correction index, and
   the correction command value modification unit is configured to set a combination of currents in respective axial directions of two rotating axes of the motor as the current condition, calculate, by using a matrix indicating the current condition, an amplitude and a phase as the modified correction index for each current condition, and calculate an amplitude and a phase as the modified correction index in the current condition that is not measured through the torque determination through linear interpolation.

9. The motor control table generation method according to Claim 1,
   wherein measurement of the pulsation amount is performed again after the correction command value modification unit writes the modified correction index into the correction table.

10. The motor control table generation method according to Claim 1,
    wherein the physical quantity is any one or both of an induced voltage and a cogging torque.

11. The motor control table generation method according to Claim 1,
    wherein the physical quantity is a sound pressure or a vibration acceleration at an outer periphery of the motor.

12. The motor control table generation method according to Claim 1,
    wherein the torque determination unit is configured to measure the pulsation amount in a state where a rotor temperature of the motor is changed to a temperature different from a room temperature.

13. The motor control table generation method according to Claim 12,

    wherein the torque determination unit is configured to measure the pulsation amount at at least two different rotor temperatures, and
    the correction command value modification unit is configured to generate the correction table into which the modified correction index corresponding to each rotor temperature is written.

14. A method for manufacturing a motor control device using the motor control table generation method according to any one of Claims 1 to 13.

**15.** A motor control table generation device that generates a correction table in which current conditions and correction indices are associated with each other in a motor control device including a correction command value calculation unit configured to calculate a correction command value for suppressing a torque ripple of a motor by using the correction table, the motor control table generation device comprising:

a torque generation unit configured to rotate the motor;

a torque determination unit configured to perform torque determination to measure a pulsation amount, which is a torque ripple or a physical quantity correlated with the torque ripple, the torque ripple including a frequency component equivalent to N times (N is an integer of 1 or more) a fundamental frequency corresponding to an electrical angle of the rotated motor; and

a correction command value modification unit configured to calculate, for each current condition, a modified correction index, which is a correction index for suppressing the pulsation amount measured through the torque determination, based on a measurement result of the torque determination of the torque determination unit, and write the modified correction index into the correction table.

FIG. 1

# FIG. 2

# FIG. 3

TORQUE PULSATION SUPPRESSION COMMAND CALCULATION
AT Id = Id1, Iq = Iq1

MOTOR ANGLE [deg]

MOTOR ANGLE [deg]

i_ca_amp
(Id1, Iq1)

i_ca_ph MOTOR ANGLE [deg]
(Id1, Iq1)

# FIG. 4

TORQUE PULSATION SUPPRESSION COMMAND CALCULATION
AT Id = Id2, Iq = Iq1

MOTOR ANGLE [deg]

MOTOR ANGLE [deg]

i_ca_amp
(Id2, Iq1)

i_ca_ph
(Id2, Iq1)

MOTOR ANGLE [deg]

# FIG. 5

210Tbl

|  | Id1 | Id2 | ··· | IdM |
|---|---|---|---|---|
| Iq1 | i_ca_amp(Id1, Iq1) | i_ca_amp(Id2, Iq1) | ··· | i_ca_amp(IdM, Iq1) |
| Iq2 | i_ca_amp(Id1, Iq2) | i_ca_amp(Id2, Iq2) | ··· | i_ca_amp(IdM, Iq2) |
| Iq3 | i_ca_amp(Id1, Iq3) | i_ca_amp(Id2, Iq3) | ··· | i_ca_amp(IdM, Iq3) |
| ··· | ··· | ··· | ··· | ··· |
| IqN | i_ca_amp(Id1, IqN) | i_ca_amp(Id2, IqN) | ··· | i_ca_amp(IdM, IqN) |

# FIG. 6

211Tbl

|  | Id1 | Id2 | ··· | IdM |
|---|---|---|---|---|
| Iq1 | i_ca_ph(Id1, Iq1)+90 | i_ca_ph(Id2, Iq1)+90 | ··· | i_ca_ph(IdM, Iq1)+90 |
| Iq2 | i_ca_ph(Id1, Iq2)+90 | i_ca_ph(Id2, Iq2)+90 | ··· | i_ca_ph(IdM, Iq2)+90 |
| Iq3 | i_ca_ph(Id1, Iq3)+90 | i_ca_ph(Id2, Iq3)+90 | ··· | i_ca_ph(IdM, Iq3)+90 |
| ··· | ··· | ··· | ··· | ··· |
| IqN | i_ca_ph(Id1, IqN)+90 | i_ca_ph(Id2, IqN)+90 | ··· | i_ca_ph(IdM, IqN)+90 |

# FIG. 7

DISTURBANCE SUPPRESSION COMMAND CALCULATION AT Id = Id1, Iq = Iq1

MOTOR ANGLE [deg]

i_ga_amp
(Id1, Iq1)

i_ga_ph
(Id1, Iq1)

MOTOR ANGLE [deg]

# FIG. 8

DISTURBANCE SUPPRESSION COMMAND CALCULATION AT Id = Id2,  Iq = Iq1

MOTOR ANGLE [deg]

i_ga_amp
(Id2, Iq1)

i_ga_ph
(Id2, Iq1)

MOTOR ANGLE [deg]

# FIG. 9

220Tbl

|  | Id1 | Id2 | ... | IdM |
|---|---|---|---|---|
| Iq1 | i_ga_amp(Id1, Iq1) | i_ga_amp(Id2, Iq1) | ... | i_ga_amp(IdM, Iq1) |
| Iq2 | i_ga_amp(Id1, Iq2) | i_ga_amp(Id2, Iq2) | ... | i_ga_amp(IdM, Iq2) |
| Iq3 | i_ga_amp(Id1, Iq3) | i_ga_amp(Id2, Iq3) | ... | i_ga_amp(IdM, Iq3) |
| ... | ... | ... | ... | ... |
| IqN | i_ga_amp(Id1, IqN) | i_ga_amp(Id2, IqN) | ... | i_ga_amp(IdM, IqN) |

# FIG. 10

221Tbl

|  | Id1 | Id2 | ... | IdM |
|---|---|---|---|---|
| Iq1 | i_ga_ph(Id1, Iq1)+90 | i_ga_ph(Id2, Iq1)+90 | ... | i_ga_ph(IdM, Iq1)+90 |
| Iq2 | i_ga_ph(Id1, Iq2)+90 | i_ga_ph(Id2, Iq2)+90 | ... | i_ga_ph(IdM, Iq2)+90 |
| Iq3 | i_ga_ph(Id1, Iq3)+90 | i_ga_ph(Id2, Iq3)+90 | ... | i_ga_ph(IdM, Iq3)+90 |
| ... | ... | ... | ... | ... |
| IqN | i_ga_ph(Id1, IqN)+90 | i_ga_ph(Id2, IqN)+90 | ... | i_ga_ph(IdM, IqN)+90 |

FIG. 11

FIG. 12

FIG. 13

FIG. 14

```
        ┌──────────────┐
        │    START     │
        └──────┬───────┘
               ▼
┌────────────────────────────────────┐
│   FIX MOTOR TO GENERATION DEVICE   │─── S10
└──────────────────┬─────────────────┘
                   ▼
┌────────────────────────────────────┐
│ CONNECT SHAFT OF MOTOR AND GENERATION │─── S11
│        DEVICE TO EACH OTHER         │
└──────────────────┬─────────────────┘
                   ▼
┌────────────────────────────────────┐
│ ROTATE ROTOR UNDER CERTAIN CURRENT CONDITION │─── S12
└──────────────────┬─────────────────┘
                   ▼
┌────────────────────────────────────┐
│ MEASURE AMPLITUDE AND PHASE OF TORQUE RIPPLE │─── S13
└──────────────────┬─────────────────┘
                   ▼
┌────────────────────────────────────┐
│     CALCULATE AMPLITUDE AND PHASE OF     │─── S14
│         CORRECTION CURRENT          │
└──────────────────┬─────────────────┘
                   ▼
┌────────────────────────────────────┐
│  REWRITE AMPLITUDE AND PHASE IN TABLE  │─── S15
└──────────────────┬─────────────────┘
                   ▼
        ┌──────────────┐
        │     END      │
        └──────────────┘
```

FIG. 15

EP 4 686 077 A1

# FIG. 16

```
                        ┌─────────────────────┐
                        │        START        │
                        └─────────────────────┘
                                   │
                                   ▼
        ┌──────────────────────────────────────────┐
        │     FIX MOTOR TO GENERATION DEVICE        │──S20
        └──────────────────────────────────────────┘
                                   │
                                   ▼
        ┌──────────────────────────────────────────┐
        │   CONNECT SHAFT OF MOTOR AND GENERATION   │──S21
        │           DEVICE TO EACH OTHER            │
        └──────────────────────────────────────────┘
                                   │
                                   ▼
        ┌──────────────────────────────────────────┐
        │ ROTATE ROTOR UNDER CERTAIN CURRENT CONDITION │──S22
        └──────────────────────────────────────────┘
                                   │
                                   ▼
        ┌──────────────────────────────────────────┐
        │   MEASURE AMPLITUDE AND PHASE OF CURRENT  │──S23
        └──────────────────────────────────────────┘
                                   │
                                   ▼
        ┌──────────────────────────────────────────┐
        │        CALCULATE AMPLITUDE AND PHASE OF   │──S24
        │             DISTURBANCE CURRENT           │
        └──────────────────────────────────────────┘
                                   │
                                   ▼
        ┌──────────────────────────────────────────┐
        │    REWRITE AMPLITUDE AND PHASE IN TABLE   │──S25
        └──────────────────────────────────────────┘
                                   │
                                   ▼
                        ┌─────────────────────┐
                        │         END         │
                        └─────────────────────┘
```

# FIG. 17

```
          ┌─────────────┐
          │    START    │
          └──────┬──────┘
                 ▼
┌────────────────────────────────────┐
│   FIX MOTOR TO GENERATION DEVICE    │──── S30
└────────────────┬───────────────────┘
                 ▼
┌────────────────────────────────────┐
│  CONNECT SHAFT OF MOTOR AND GENERATION │──── S31
│       DEVICE TO EACH OTHER          │
└────────────────┬───────────────────┘
                 ▼
┌────────────────────────────────────┐
│   ROTATE ROTOR IN NO-LOAD STATE     │──── S32
└────────────────┬───────────────────┘
                 ▼
┌────────────────────────────────────┐
│   MEASURE AMPLITUDE AND PHASE OF    │──── S33
│          INDUCED VOLTAGE            │
└────────────────┬───────────────────┘
                 ▼
┌────────────────────────────────────┐
│   MEASURE AMPLITUDE AND PHASE OF    │──── S34
│          COGGING TORQUE             │
└────────────────┬───────────────────┘
                 ▼
┌────────────────────────────────────┐
│   CALCULATE AMPLITUDE AND PHASE OF  │──── S35
│         CORRECTION CURRENT          │
└────────────────┬───────────────────┘
                 ▼
┌────────────────────────────────────┐
│  REWRITE AMPLITUDE AND PHASE IN TABLE │──── S36
└────────────────┬───────────────────┘
                 ▼
          ┌─────────────┐
          │     END     │
          └─────────────┘
```

# FIG. 18

(2) ESTIMATION ERROR DUE TO
    VARIATION IN SLOPE WHEN
    CURRENT IS APPLIED

(1) ESTIMATION ERROR DUE TO MAGNETIC
    FLUX VARIATION IN NO-LOAD CONDITION

(1)+(2)

φ

Id

# FIG. 19

(2) ESTIMATION ERROR DUE TO
    VARIATION IN SLOPE WHEN
    CURRENT IS APPLIED

ESTIMATED VALUE OF MAGNETIC FLUX
AFTER CORRECTION

ESTIMATED VALUE OF MAGNETIC FLUX
BEFORE CORRECTION

φ

Id

FIG. 20

Ld-Lq

(2) ESTIMATION ERROR DUE TO
VARIATION IN SLOPE WHEN
CURRENT IS APPLIED

(1) ESTIMATION ERROR DUE TO INDUCTANCE
VARIATION IN NO-LOAD CONDITION

(1)+(2)

Id

FIG. 21

Ld-Lq

(2) ESTIMATION ERROR DUE TO
VARIATION IN SLOPE WHEN
CURRENT IS APPLIED

ESTIMATED VALUE OF DIFFERENCE IN
INDUCTANCE AFTER CORRECTION

ESTIMATED VALUE OF DIFFERENCE IN
INDUCTANCE BEFORE CORRECTION

Id

FIG. 22

```
                    ┌─────────────┐
                    │    START    │
                    └─────────────┘
                           │
                           ▼
        ┌──────────────────────────────────────┐
        │  FIX MOTOR TO GENERATION DEVICE       │─── S40
        └──────────────────────────────────────┘
                           │
                           ▼
        ┌──────────────────────────────────────┐
        │  CONNECT SHAFT OF MOTOR AND GENERATION│─── S41
        │  DEVICE TO EACH OTHER                 │
        └──────────────────────────────────────┘
                           │
                           ▼
        ┌──────────────────────────────────────┐
        │ ROTATE ROTOR UNDER CERTAIN CURRENT    │─── S42
        │ CONDITION                             │
        └──────────────────────────────────────┘
                           │
                           ▼
        ┌──────────────────────────────────────┐
        │ MEASURE AMPLITUDE AND PHASE OF        │─── S43
        │ PHYSICAL QUANTITY CORRELATED WITH     │
        │ TORQUE RIPPLE                         │
        └──────────────────────────────────────┘
                           │
                           ▼
        ┌──────────────────────────────────────┐
        │  CALCULATE AMPLITUDE AND PHASE OF     │─── S44
        │  CORRECTION CURRENT                   │
        └──────────────────────────────────────┘
                           │
                           ▼
        ┌──────────────────────────────────────┐
        │  REWRITE AMPLITUDE AND PHASE IN TABLE │─── S45
        └──────────────────────────────────────┘
                           │
                           ▼
                    ┌─────────────┐
                    │     END     │
                    └─────────────┘
```

FIG. 23

```
                    ┌─────────────┐
                    │    START    │
                    └─────────────┘
                           │
                           ▼
        ┌──────────────────────────────────────────┐
        │      FIX MOTOR TO GENERATION DEVICE       │───S50
        └──────────────────────────────────────────┘
                           │
                           ▼
        ┌──────────────────────────────────────────┐
        │  CONNECT SHAFT OF MOTOR AND GENERATION    │───S51
        │         DEVICE TO EACH OTHER              │
        └──────────────────────────────────────────┘
                           │
                           ▼
        ┌──────────────────────────────────────────┐
        │        CHANGE TEMPERATURE OF ROTOR        │───S52
        └──────────────────────────────────────────┘
                           │
                           ▼
        ┌──────────────────────────────────────────┐
        │ ROTATE ROTOR UNDER CERTAIN CURRENT CONDITION│───S53
        └──────────────────────────────────────────┘
                           │
                           ▼
        ┌──────────────────────────────────────────┐
        │ MEASURE AMPLITUDE AND PHASE OF TORQUE RIPPLE│───S54
        └──────────────────────────────────────────┘
                           │
                           ▼
        ┌──────────────────────────────────────────┐
        │       CALCULATE AMPLITUDE AND PHASE OF     │───S55
        │            CORRECTION CURRENT             │
        └──────────────────────────────────────────┘
                           │
                           ▼
        ┌──────────────────────────────────────────┐
        │     REWRITE AMPLITUDE AND PHASE IN TABLE  │───S56
        └──────────────────────────────────────────┘
                           │
                           ▼
                    ┌─────────────┐
                    │     END     │
                    └─────────────┘
```

FIG. 24

```
                    ┌─────────────────┐
                    │      START      │
                    └─────────────────┘
                             │
                             ▼
        ┌──────────────────────────────────────────┐
        │  FIX MOTOR TO GENERATION DEVICE          │─── S60
        └──────────────────────────────────────────┘
                             │
                             ▼
        ┌──────────────────────────────────────────┐
        │  CONNECT SHAFT OF MOTOR AND GENERATION    │─── S61
        │  DEVICE TO EACH OTHER                     │
        └──────────────────────────────────────────┘
                             │
                             ▼
        ┌──────────────────────────────────────────┐
        │  ROTATE ROTOR UNDER CERTAIN CURRENT CONDITION │─── S62
        └──────────────────────────────────────────┘
                             │
                             ▼
        ┌──────────────────────────────────────────┐
        │  MEASURE AMPLITUDE AND PHASE OF TORQUE RIPPLE │─── S63
        └──────────────────────────────────────────┘
                             │
                             ▼
        ┌──────────────────────────────────────────┐
        │  CALCULATE AMPLITUDE AND PHASE OF         │─── S64
        │  CORRECTION CURRENT                       │
        └──────────────────────────────────────────┘
                             │
                             ▼
        ┌──────────────────────────────────────────┐
        │  REWRITE AMPLITUDE AND PHASE IN TABLE     │─── S65
        └──────────────────────────────────────────┘
                             │
                             ▼
        ┌──────────────────────────────────────────┐
        │  CHANGE TEMPERATURE OF ROTOR             │─── S66
        └──────────────────────────────────────────┘
                             │
                             ▼
        ┌──────────────────────────────────────────┐
        │  EXECUTE STEPS S62 TO S65                │─── S67
        └──────────────────────────────────────────┘
                             │
                             ▼
                    ┌─────────────────┐
                    │       END       │
                    └─────────────────┘
```

## INTERNATIONAL SEARCH REPORT

| International application No. |
| --- |
| **PCT/JP2023/011065** |

**A. CLASSIFICATION OF SUBJECT MATTER**

*H02P 6/10*(2006.01)i; *H02P 21/05*(2006.01)i; *H02P 21/22*(2016.01)i
FI: H02P6/10; H02P21/22; H02P21/05

According to International Patent Classification (IPC) or to both national classification and IPC

**B. FIELDS SEARCHED**

Minimum documentation searched (classification system followed by classification symbols)

H02P6/10; H02P21/05; H02P21/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2011-50118 A (KABUSHIKI KAISHA MEIDENSHA) 10 March 2011 (2011-03-10) paragraphs [0024]-[0045], fig. 1-4 | 1-5, 7, 9-15 |
| A | | 6, 8 |
| Y | US 2014/0265961 A1 (GEBREGERGIS, Abraham) 18 September 2014 (2014-09-18) in particular, paragraphs [0011]-[0033], fig. 1-3, in particular, paragraph [0023] | 1-5, 7, 9-15 |
| Y | JP 2015-33265 A (JTEKT CORP.) 16 February 2015 (2015-02-16) abstract, paragraphs [0007], [0008] | 1-5, 9-15 |
| Y | JP 2008-168669 A (JTEKT CORP.) 24 July 2008 (2008-07-24) abstract, claims 1, 2, 5, paragraphs [0009], [0010], [0020] | 13, 14 |
| A | CN 114928301 A (WUHAN ZHIQU POWER TECHNOLOGY CO., LTD.) 19 August 2022 (2022-08-19) paragraphs [0028]-[0049], fig. 1-7 | 1-15 |

☐ Further documents are listed in the continuation of Box C.     ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/011065**

| Patent document<br>cited in search report | | | Publication date<br>(day/month/year) | Patent family member(s) | Publication date<br>(day/month/year) |
|---|---|---|---|---|---|
| JP | 2011-50118 | A | 10 March 2011 | (Family: none) | |
| US | 2014/0265961 | A1 | 18 September 2014 | EP 2779415 A2<br>paragraphs [0008]-[0030], fig.<br>1-3, in particular, paragraph<br>[0020]<br>CN 104052361 A | |
| JP | 2015-33265 | A | 16 February 2015 | (Family: none) | |
| JP | 2008-168669 | A | 24 July 2008 | (Family: none) | |
| CN | 114928301 | A | 19 August 2022 | (Family: none) | |

Form PCT/ISA/210 (patent family annex) (January 2015)

**REFERENCES CITED IN THE DESCRIPTION**

**Patent documents cited in the description**

- JP 2016111788 A